# EUROPEAN PATENT APPLICATION

(11) **EP 1 447 755 A1**
(43) Date of publication of application: **18.08.2004**
(21) Application number: 02803513.7
(22) Date of filing: 19.11.2002
(51) Int. Cl.: G06F 17/30

(54) **DATA PROCESSOR AND DATA PROCESSING METHOD**

(30) Priority: 19.11.2001 JP 2001353494; 15.11.2002 JP 2002332951
(71) Applicant: MATSUSHITA ELECTRIC INDUSTRIAL CO., LTD., Kadoma-shi, Osaka 571-8501 (JP)
(72) Inventor: TADA, Hiroyuki, Kawasaki-shi, Kanagawa 214-0022 (JP); TANIGUCHI, Koji, Yokohama-shi, Kanagawa 230-0024 (JP); SATO, Junichi, Nara-shi, Nara 631-0801 (JP)
(74) Representative: Grünecker, Kinkeldey, Stockmair & Schwanhäusser Anwaltssozietät
(86) International application number: PCT/JP2002/012045
(87) International publication number: WO 2003/044694

(57) **Abstract**

The present invention creates contents which are structure description data in which a predetermined element and document data associated with this element are written in a structure description language, inputs the element to these contents and extracts the document data corresponding to the input element, and thereby allows the user to extract the document data adapted to the predetermined element from one content.

## Description

### Technical Field

The present invention relates to a data processing apparatus and data processing method for extracting document data written in a structure description language.

### Background Art

With the widespread use of the Internet, contents (multimedia data such as document, image and sound) written in a structure description language such as HTML (HyperText Markup Language) using WWW (World Wide Web) are being circulated more and more rapidly in recent years.

Furthermore, against a background of the wide dispersion of a mobile computing environment using cellular phone, PHS, etc., contents providing services for cellular phones such as "i mode" run by NTT DoCoMo, "EZweb" run by KDDI or "J-SKY Web" run by J-PHONE are also becoming widespread rapidly.

Furthermore, contents are also provided by data broadcasting using digital broadcasting satellites.

As shown above, apparatuses for processing/displaying contents are more and more diversified such as personal computer, cellular phone, and TV. Contents to be delivered for such apparatuses for processing/displaying contents are delivered in a mode adapted to such processing/display apparatuses (for example, the method disclosed in the Unexamined Japanese Patent Publication No.2000-250842).

However, there is a problem that delivering contents adapted to apparatuses for processing/displaying contents requires a contents provider to create contents adapted to each of these apparatuses.

Furthermore, there are also contents that should be preferably changed depending on the place where a user is located or the current time, for example, by delivering different contents for users in Tokyo and users in Osaka or delivering different contents in the morning and night. However, contents written in a structure description language such as HTML are not provided with the function of implementing descriptions associated with position information and time information. Thus, the problem is that the contents provider is required to create contents which differ from one position information piece or time information piece to another.

### Disclosure of Invention

It is an object of the present invention to allow the user to extract document data adapted to desired elements from one content.

The present invention creates a content which is structure description data in which a predetermined element and document data associated with this element are written in a structure description language, inputs the element to this content and allows the document data corresponding to the input element to be extracted from the content.

This allows the user to extract the document data adapted to predetermined elements from one content.

### Brief Description of Drawings

FIG.1 is a block diagram of a contents providing system according to Embodiment 1 of the present invention;
FIG.2 illustrates a definition and description of contents according to Embodiment 1;
FIG. 3 illustrates a contents description according to Embodiment 1;
FIG.4 illustrates a contents description according to Embodiment 1;
FIG.5 illustrates a contents description according to Embodiment 1;
FIG.6 illustrates a contents description according to Embodiment 1;
FIG.7 is a first flow chart of contents processing by a contents processing apparatus according to Embodiment 1;
FIG.8 is a second flow chart of contents processing by the contents processing apparatus according to Embodiment 1;
FIG.9 illustrates contents extracted by a contents processing section according to Embodiment 1;
FIG.10 is another block diagram of the contents providing system according to Embodiment 1;
FIG. 11 is a block diagram of a contents providing system according to Embodiment 2 of the present invention;
FIG. 12 illustrates a definition and description of contents according to Embodiment 2;
FIG. 13. illustrates a contents description according to Embodiment 2;
FIG. 14 illustrates a contents description according to Embodiment 2;
FIG.15 is a first flow chart of contents processing by a contents processing apparatus according to Embodiment 2;
FIG.16 is a second flow chart of contents processing by the contents processing apparatus according to Embodiment 2;
FIG. 17 illustrates contents extracted by a contents processing section according to Embodiment 2;
FIG.18 is a block diagram of a contents providing system according to Embodiment 3 of the present invention;
FIG.19 illustrates a definition and description of contents according to Embodiment 3;
FIG. 20 illustrates a contents description according to Embodiment 3;
FIG.21 illustrates a contents description according to Embodiment 3;
FIG. 22 is a first flow chart of contents processing by a contents processing apparatus according to Embodiment 3;
FIG. 23 is a second flow chart of contents processing by the contents processing apparatus according to Embodiment 3;
FIG.24 illustrates contents extractedy by a contents processing section according to Embodiment 3;
FIG.25 is a block diagram of a contents providing system according to Embodiment 4 of the present invention;
FIG.26 illustrates a definition and description of contents according to Embodiment 4;
FIG.27 illustrates a contents description according to Embodiment 4;
FIG.28 is a first flow chart of contents processing by a contents processing apparatus according to Embodiment 4;
FIG.29 is a second flow chart of contents processing by the contents processing apparatus according to Embodiment 4;
FIG.30 is a third flow chart of contents processing by the contents processing apparatus according to Embodiment 4;
FIG.31 illustrates a definition and description of contents according to Embodiment 5 of the present invention;
FIG.32 is a second diagram showing a contents definition and description according to Embodiment 5;
FIG.33 is a third diagram showing a contents definition and description according to Embodiment 5;
FIG.34 is a fourth diagram showing a contents definition and description according to Embodiment 5;
FIG.35 is a fifth diagram showing a contents definition and description according to Embodiment 5;
FIG.36 is a sixth diagram showing a contents definition and description according to Embodiment 5;
FIG.37 is a seventh diagram showing a contents definition and description according to Embodiment 5;
FIG.38 is an eighth diagram showing a contents definition and description according to Embodiment 5;
FIG.39 is a ninth diagram showing a contents definition and description according to Embodiment 5;
FIG.40 is a first diagram showing a contents definition according to Embodiment 5;
FIG.41 is a second diagram showing a contents definition according to Embodiment 5;
FIG.42 is a third diagram showing a contents definition according to Embodiment 5;
FIG.43 is a first flow chart of contents processing by a contents processing apparatus according to Embodiment 5;
FIG.44 is a second flow chart of contents processing by the contents processing apparatus according to Embodiment 5; and
FIG.45 is a third flow chart of contents processing by the contents processing apparatus according to Embodiment 5.

### Best Mode for Carrying out the Invention

### (Embodiment 1)

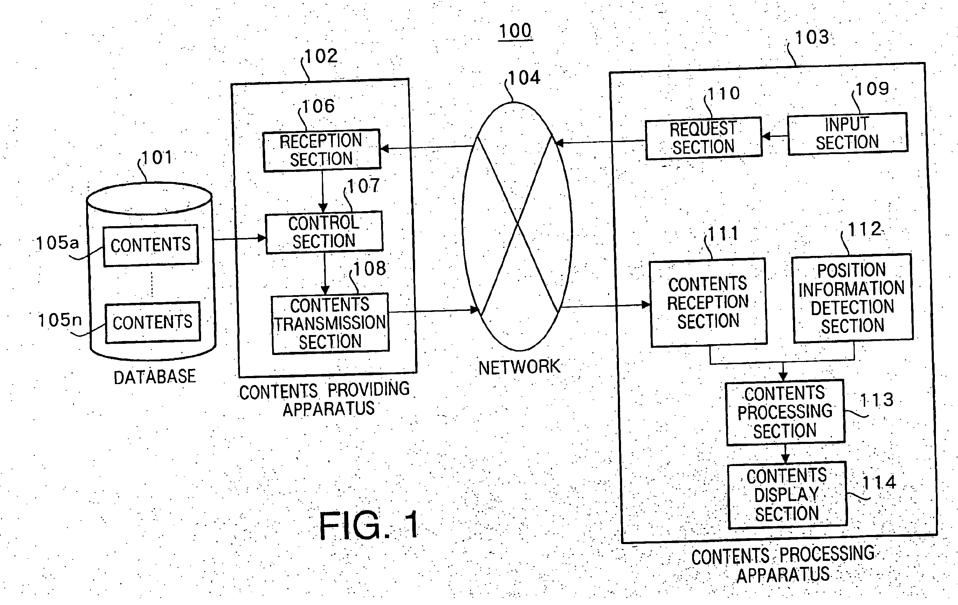

With reference now to the attached drawings, a contents providing system according to Embodiment 1 of the present invention will be explained below. First, a configuration of the contents providing system according to Embodiment 1 will be explained using FIG.1. FIG.1 is a block diagram of the contents providing system according to Embodiment 1.

A contents providing system 100 according to Embodiment 1 on the contents provider side is provided with a database 101 that stores a plurality of contents, 105a to 105n, which are structure description data in which a predetermined element and document data associated with this element are written in a structure description language and a contents providing apparatus 10.2 that extracts contents 105a to 105n corresponding to the user's request from the database 101 and supplies the contents to the user. Furthermore, the contents providing system 100 on the user side is provided with a contents processing apparatus 103 that sends a request for contents 105a to 105n to the contents provider and extracts and displays the document data corresponding to a predetermined element from the contents 105a to 105n sent from the contents provider. Furthermore, the contents providing apparatus 102 and contents processing apparatus 103 are connected through a network 104 and perform transmission/reception of information through the network. Furthermore, in Embodiment 1, position information is used as the predetermined element to be described in the contents 105a to 105n.

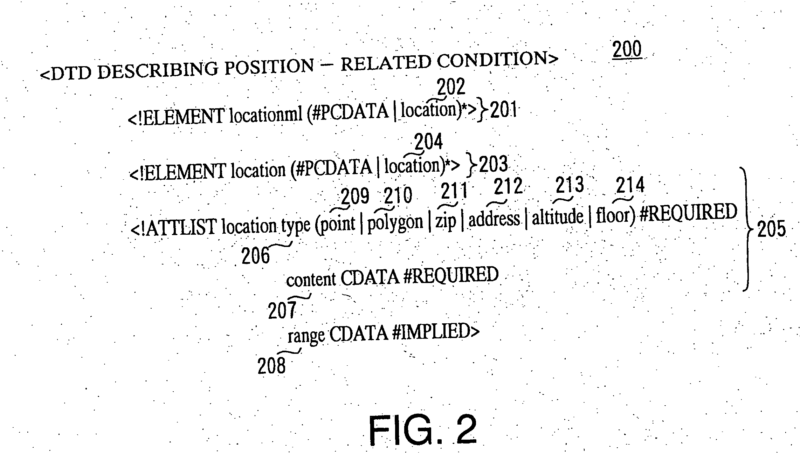

Next, the contents stored in the database 101 will be explained. First, the definition and description of contents will be explained more specifically using FIG.2. FIG.2 illustrates the definition and description of the contents according to Embodiment 1.

As shown in FIG.2, the contents description definition 200 is written in DTD (Document Type Definition) of XML (eXtensible Markup Language).

As indicated by reference numeral 201 in the figure, the contents description definition 200 defines that the content 105 includes locationml as an element and in the element "locationml", text data and 0 or more elements "location" 202 that describe position information as child elements are described in an arbitrary sequence.

Furthermore, as indicated by reference numeral 203 in the figure, it also defines that in the element "location" 202, text data and 0 or more elements "location" 204 as child elements are described in an arbitrary sequence. In this way, the element "location" 202 has a structure having element "location" 204 as a child element, which allows the element "location" 202 to specify position information in a large range and allows the child element "location" 204 to specify position information in a narrowed range.

Furthermore, as indicated by reference numeral 205 in the figure, the elements "location" 202 and 204 are defined to have an attribute "type" 206 that shows a method for describing position information, a "content" 207 that describes the entity of the position information using the description method of the attribute "type" 206 and an attribute "range" 208 that shows a range of the position information. Furthermore, the attribute "type" 206 and attribute "content" 207 are attributes compulsory to be described, while the attribute "range" 208 is an omissible element.

Furthermore, for the attribute "type" 206, it is possible to specify the position information using any one of methods of point 209, polygon 210, zip 211 and address 212.

The point 209 is a method for describing position information with a range indicated by the attribute "range" 208 centered on a point specified by the attribute "content" 207, that is, a circle having a radius of the attribute "range" 208 centered on the point specified by the attribute "content" 207. When the position information is specified by the point 209, a latitude and longitude of a central point are described in the attribute "content" 207 and a radius is described in meters in the attribute "range" 208. By the way, values written in the attribute "content" 207 and attribute "range" 208 can be specified by any method other than the method of specifying with a longitude and latitude and in meters if it can at least specify the central point and radius.

Furthermore, the polygon 210 is a method of describing position information with a polygon using positions described in the attribute "content" 207 as vertices. When position information is specified by the polygon 210, a latitude and longitude are described in the attribute "content" 207 as vertices. By the way, values described in the attribute "content" 207 can be specified by any method other than the method of specifying with a longitude and latitude if it can at least specify the vertices.

Furthermore, the zip 211 is a method for describing a postal code as position information in the attribute "content" 207. Furthermore, the method for specifying position information using the zip 211 can describe up to which digit from the start of a postal code is effective in the attribute "range" 208. By the way, this embodiment describes a continuous 7-digit number as the postal code in the attribute "content" 207, but it is also possible to adopt a mode of inserting "-" between the third and fourth digits.

Furthermore, the address 212 is a method for describing an address as position information in the attribute "content" 207. In the attribute "content" 207, it is possible to simply describe one piece of information such as ○ ○ prefecture, ×× city, or describe a detailed address by combining a plurality of pieces of information like No.□ ○ Δ-chome ×× city ○ ○ prefecture with a space, inserted in between. Furthermore, when No.□ ○ Δ -chome ×× city ○ ○ prefecture is described with a space inserted in between in the attribute "content" 207, it is possible to specify up to which part of the information is regarded as effective in the attribute "range" 208. For example, if No.□ ○ Δ-chome ×× city ○ ○ prefecture is described in the attribute "content" 207 and "2" is described in the range 208, the top two pieces of information on up to ×× city ○ ○ prefecture with a space inserted in between are effective.

Furthermore, the altitude 213 is a method for describing altitude as a position attribute in the attribute "content" 207. It is possible to simply describe ○ ○M or describe high, middle or low in the attribute "content" 207.

Furthermore, the floor 214 is a method for describing the floor number of a building as a position attribute in the attribute "content" 207. For example, the ○ ○ th floor is described in the attribute "content" 207.

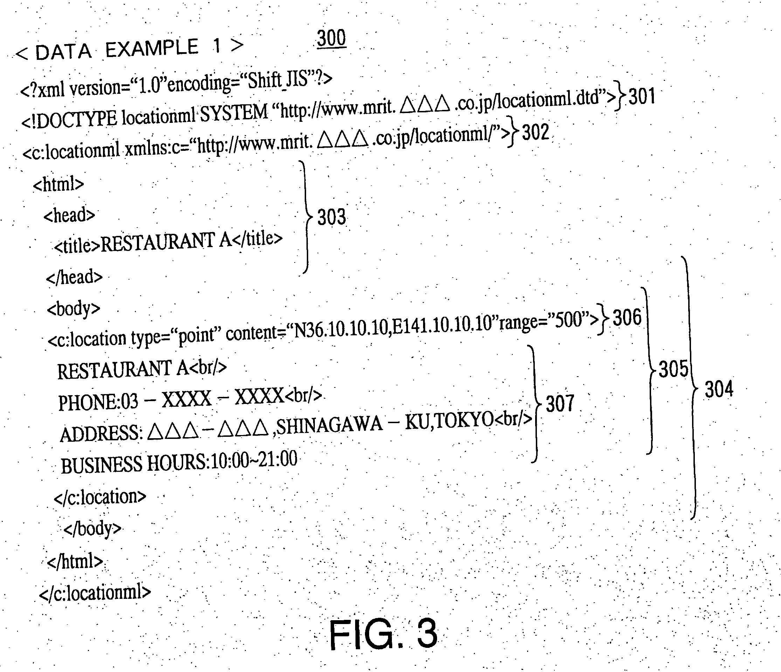

Next, a contents description created using the contents description definition shown in FIG.2 will be explained using FIG.3 to FIG.6. FIG. 3 to FIG.6 illustrate the contents description according to Embodiment 1.

First, the contents description shown in FIG. 3 will be explained. The contents description 300 specifies a URL for storing a DTD (DTD shown in FIG.2) "locationml" to be used indicated by reference numeral 301 in the figure. Reference numeral 302 in the figure specifies a root element of the element "locationml" that belongs to a name space together with the name space. More specifically, the name of the name space is declared as URI (URL) and the name space prefix is declared as "c:".

Furthermore, as indicated by reference numeral 303 in the figure, the contents description 300 describes "restaurant A" as a title in the header section enclosed by head tags.

Furthermore, the contents description 300 describes an element "location" which is an element of the name space specified by reference numeral 304 in the figure and a child element of locationml (part indicated by reference numeral 305 in the figure).

Furthermore, as indicated by reference numeral 306 in the figure, for the element "location", "point" is selected as the method for specifying the attribute "type" and the attribute "content" describes a central point "N36. 10. 10. 10, E141. 10. 10. 10" and the attribute "range" describes the range (radius) from the central point as "500" m. Thus, the contents 300 specifies a circle specified in the above-described range from the above-described central point as the position information.

Furthermore, as indicated by reference numeral 307 in the figure, the element "locationml" describes "restaurant A - business hours: 10:00 to 21:00" as text (document) data.

Thus, the contents description 300 includes, within the element "locationml", the element "location" indicating position information specified by a central point and the range from the central point, and document data associated with the element "location" written in a structure description language.

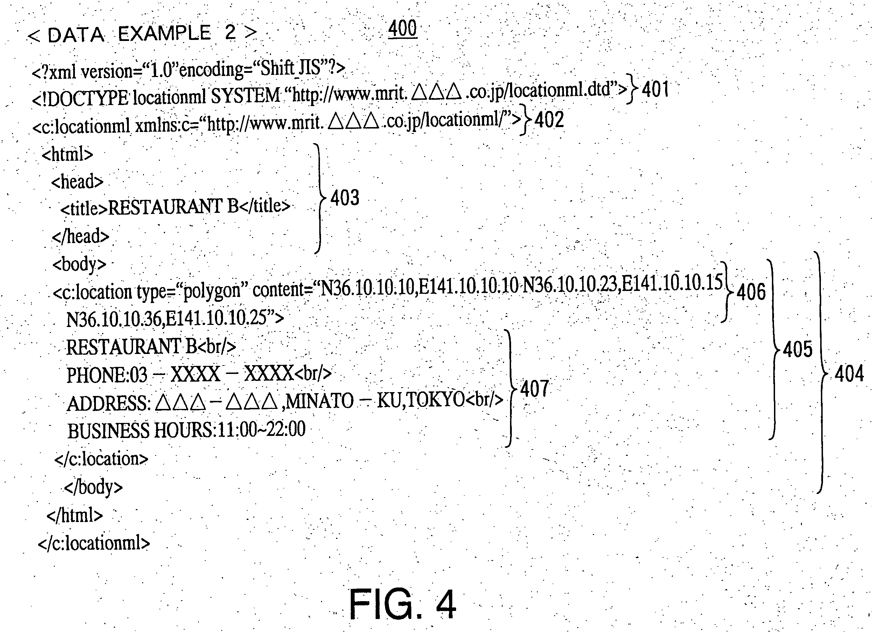

Next, a contents description shown in FIG.4 will be explained. A contents description 400 specifies a URL for storing a DTD "locationml" used by reference numeral 401 in the figure. Furthermore, reference numeral 402 in the figure specifies a name space as well as a root element of the element "locationml" that belongs to the name space.

Furthermore, as indicated by reference numeral 403, the contents description 400 describes "restaurant B" as a title in the header section enclosed by head tags.

Furthermore, the contents description 400 also describes the element "location" which is the name space specified by reference numeral 402 in the figure and a child element of locationml in the body section enclosed by body tags indicated by reference numeral 404 in the figure (portion indicated by reference numeral 405 in the figure).

Furthermore, as indicated by reference numeral 406 in the figure, "polygon" is selected in the element "location" as the method for specifying the attribute "type" and the attribute "content" describes 3 vertices "N36. 10. 10. 10, E141. 10. 10. 10 N36. 10. 10. 23, E141. 10. 10. 15 N36. 10. 10. 36, E 141. 10. 10. 25." Thus, the contents 400 specifies the polygon enclosed by the above-described three vertices as the position information.

Furthermore, as indicated by reference numeral 407 in the figure, the element "locationml" describes "restaurant B ∼ Business hours 11:00 to 22:00" as text (document) data.

Thus, the contents description 400 contains within its element "locationml", the element "location" indicating the position information specified, by the polygon and the document data associated with the element "location" written in a structure description language.

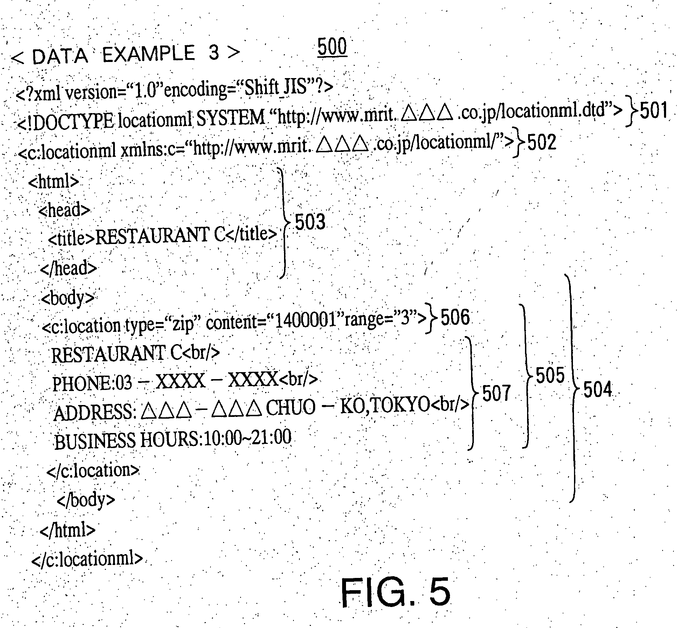

Next, the contents description described in FIG.5 will be explained. Reference numeral 501 in the figure of the contents description 500 specifies URL for storing DTD "locationml" used. Furthermore, reference numeral 502 in the figure specifies not only the name space but also the root element of the element "locationml" that belongs to the name space.

Furthermore, as indicated by reference numeral 503 in the figure, the contents description 500 describes "restaurant C" as the title in the header section enclosed by head tags.

Furthermore, the contents description 500 describes an element "location" which is the element of the name space specified by reference numeral 502, in the figure and a child element of locationml in the body section enclosed by body tags indicated by reference numeral 504 in the figure (portion indicated by reference numeral 505 in the figure).

Furthermore, as indicated by reference numeral 506 in the figure, the element "location" selects zip as the method for specifying the attribute "type" and the attribute "content" describes a 7-digit postal code of "1400001" and the attribute "range" describes the number of significant digits "3", meaning that the high-order 3 digits of the postal code are valid. Thus, the contents 500, specifies the range of the location corresponding to the postal code with significant digits specified as position information.

Furthermore, as indicated by reference numeral 507 in the figure, the element "locationml" describes "restaurant C ∼ business hours: 10:00 to 21:00" as text (document) data.

Thus, the contents description 500 describes within its element "locationml" the element "location" indicating the position information specified by the postal code and the document data associated with the element "location" written in a structure description language.

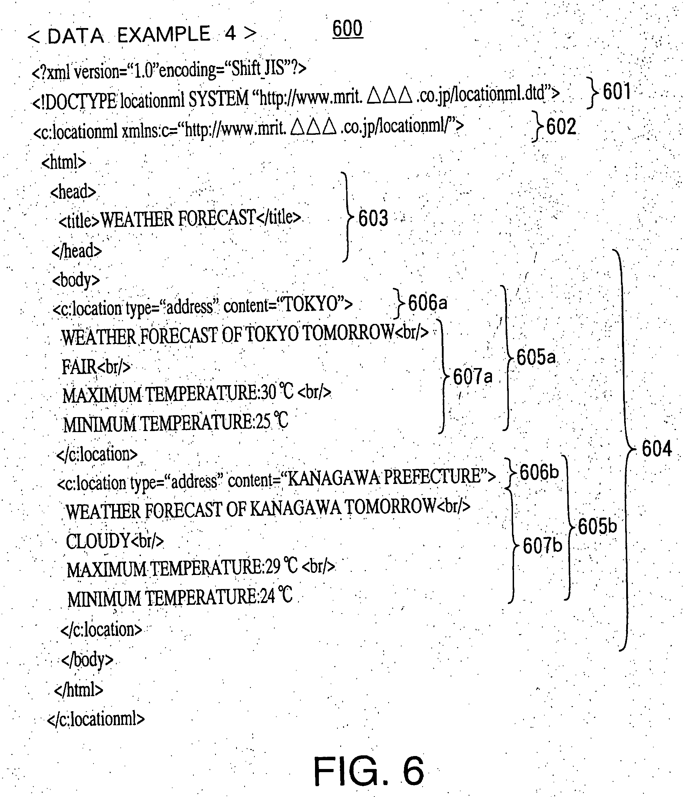

Next, the contents description described in FIG.6 will be explained. Reference numeral 601 in the figure of the contents description 600 specifies URL for storing DTD "locationml" used. Furthermore, reference numeral 602 in the figure specifies not only the name space but also the root element of the element "locationml" that belongs to the name space.

Furthermore, as indicated by reference numeral 603 in the figure, the contents description 600 describes "weather forecast" as the title in the header section enclosed by head tags.

Furthermore, the contents description 600 describes an element "location" which is the element of the name space specified by reference numeral 602 in the figure and a child element of locationml in the body section enclosed by the body tags indicated by reference numeral 604 in the figure (portions indicated by reference numerals 605a and 605b in the figure).

Furthermore, as indicated by reference numeral 606a in the figure, the element "location" selects "address" as the method for specifying the attribute "type" and the attribute "content" describes an address "Tokyo." Furthermore, the element "location" indicated by reference numeral 606b in the figure selects "address" as the method for specifying the attribute "type" and the attribute "content" describes an address "Kanagawa Prefecture." Thus, the contents 600 specifies the location corresponding to the aforementioned address as position information.

Furthermore, as indicated by reference numeral 607a in the figure, the element "locationml" 606a describes "Weather forecast of Tokyo tomorrow - minimum temperature: 25°C" as text (document) data. Furthermore, as indicated by reference numeral 607b in the figure, the element "locationml" 606b describes "Weather forecast of Kanagawa tomorrow - minimum temperature: 24°C" as text (document) data.

Thus, the contents description 600 describes within its element "locationml" the element "location" indicating the position information specified by the address and the document data associated with the element "location" written in a structure description language.

By the way, in the example of FIG.6, "Tokyo" and "Kanagawa Prefecture" are described as the addresses but it is also possible to describe the address in more detail using spaces like "Higashi-Shinagawa Shinagawa-Ku Tokyo."

Next, returning to FIG.1, the contents providing apparatus 102 will be explained. The contents providing apparatus 102 is provided with a reception section 106, a control section 107 and a contents transmission section 108.

The reception section 106 receives contents request information requesting contents 105 sent from the contents processing section 113 through the network 104. Then, the reception section 106 outputs the received contents request information to the control section 107.

The control section 107 controls the contents 105 stored in the database 101, inputs the contents request information sent from the reception section 106, extracts the contents 105 corresponding to the contents request information input and outputs the contents to the contents transmission section 108.

The contents transmission section 108 inputs the contents 105 output from the control section 107 and sends the contents to the contents processing apparatus 103 through the network.

Next, the contents processing apparatus 103 will be explained. The contents processing apparatus 103 is a stationary terminal such as a PC or a mobile terminal such as a cellular phone. However, since Embodiment 1 uses position information as a predetermined element described in the contents 105, it is preferable to use a mobile communication apparatus such as a cellular phone as the contents processing apparatus 103. In this case, a mobile communication network is used as the network

The contents processing apparatus 103 is provided with an input section 109 and a request section 110 as means for requesting the contents providing apparatus 102 for contents.

The input section 109 is means for inputting contents request information to the contents providing apparatus 102. The user inputs the contents request information by specifying the URL of the contents 105 from the input section 109 or selecting desired contents 105 from a Contents list. Furthermore the input section 109 outputs the contents request information input to the request section 110.

The request section 110 inputs the contents request information output from the input section 109 and sends the information to the contents providing apparatus 102 through the network 104.

Furthermore, the contents processing apparatus 103 is further provided with a contents reception section 111 for receiving the contents 105 sent from the contents providing apparatus 102 through the network 104. The contents reception section 111 outputs the received contents 105 to the contents processing section 113.

Furthermore, the contents processing apparatus 103 is provided with a position information detection section 112 that detects position information on the contents processing section, 113. The position information detection section 112 is means for automatically detecting the position of the contents processing apparatus 103 such as GPS. The position information detection section 112 outputs the detected position information to the contents processing section 113. Embodiment 1 has adopted the position information detection section 112, but it is also possible to adopt means for directly inputting position information from a keyboard, etc.

The contents processing section 113 inputs the contents 105 output from the contents reception section 111 and the position information output from the position information detection section 112, extracts document data corresponding to the position information sent from the position detection section 112 from the contents 105 and outputs it to a contents display section 114.

The contents display section 114 is a display or liquid crystal monitor, etc., and is means for displaying document data of the contents 105 transmitted.

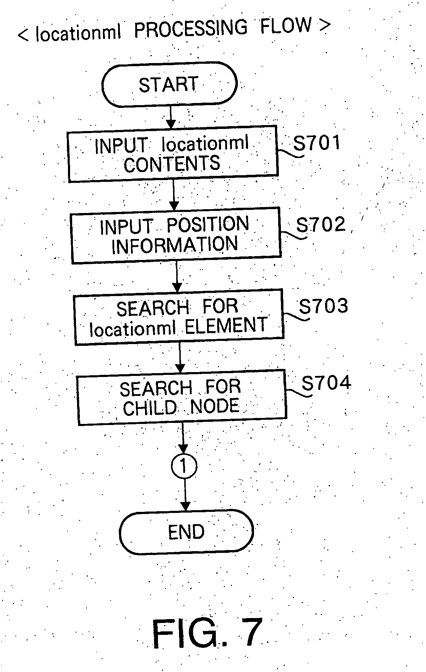

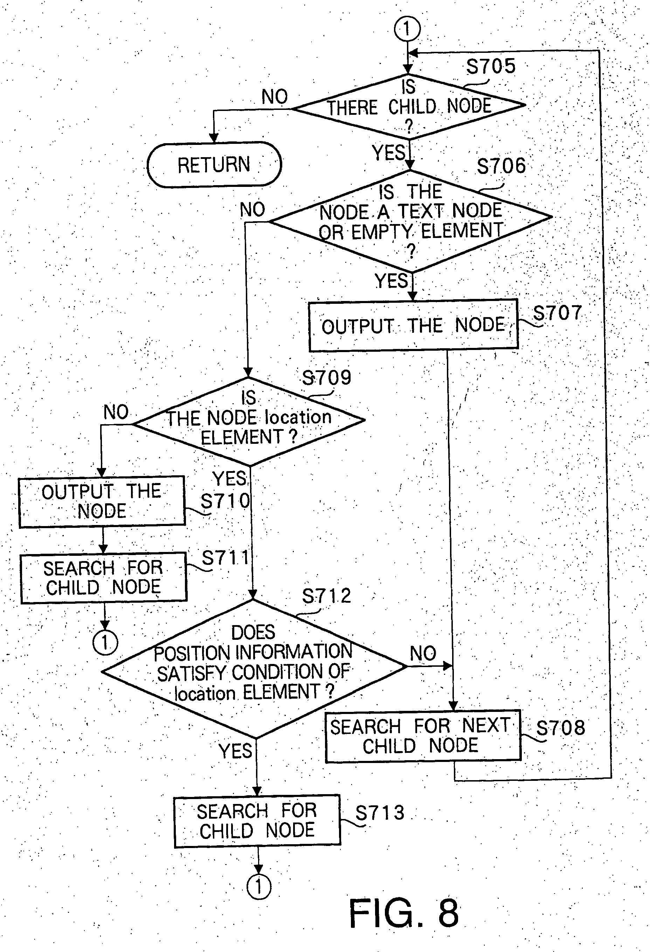

Next, contents processing by the contents processing apparatus 103 will be explained in detail using FIG.7 and FIG.8. FIG.7 and FIG.8 are flow charts of contents processing of the contents processing apparatus according to Embodiment 1.

First, the contents processing apparatus 103 sends the contents request information input by the input section 109 from the request section 110 to the contents providing apparatus 102 through the network. Then, the contents processing apparatus 103 receives contents sent by the contents providing section 102 in response to this contents request information transmitted, locationml contents in this case, through the contents reception section 111. Then, the contents reception section 111 outputs the locationml contents to the contents processing section 113 and the contents processing section 113 inputs the locationml contents described based on the contents definition shown in FIG.2 (S701).

Next, the position information detection section 112. detects the position information on the contents processing apparatus 103 and outputs the position information to the contents processing section 113. The contents processing section 113 inputs this (S702).

Then, the contents processing section 113 searches for the root element of locationml from the locationml contents input in S701 (S703).

Then, the contents processing section 113 searches for a child node in the locationml root element (S704) to decide whether any child node exists or not (S705). Then, the contents processing section 113 ends the processing when no child node exists in the root element of locationml, and decides, when some child node exists, whether the child node is a text node which is a node in a name space different from locationml or an empty element (S706). Then, when the child node is a text node or an empty element, the contents processing section 113 outputs the child node to the contents display section 114 (S707). Then, the contents processing section 113 searches for the next child node of the locationml element (S708) and moves on to processing in S705.

On the other hand, in S706 when the child node is neither a text node nor an empty element, the contents processing section 113 decides whether the node is a location element or not (S709).

Then when the contents processing section 113 decides in S709 that the child node is not a location element, the contents processing section 113 outputs the node to the contents display section 114 (S710), searches for the next child node (S711) and moves on to the processing in S705.

On the other hand, when the contents processing section 113 decides in S709 that the child node is an location element, the contents processing section 113 decides whether the attribute "type", attribute "content" and attribute "range" of this location element satisfy the condition of the position information input in S702 or not (S712). When the contents processing section 113 decides in S712 that the attribute "type", attribute "content" and attribute "range" of this location element satisfy the condition of the position information input, the contents processing section 113 searches for a child node of this location element (S713) and moves on to the processing in S705. Then when the contents processing section 113 decides in S706 that the child node of this location element is a text node or empty element, the contents processing section 113 outputs the child node of this location element to the contents display section 114 in S707. That is, it outputs the document data of this location element.

On the other hand, the contents processing section 113 decides in S712 that the attribute "type", attribute "content" and attribute "range" of the location element do not satisfy the condition of the position information input in S702, the contents processing section 113 searches for the next child node (S708) and moves on to the processing from S705 onward. That is, when the attribute of the location element does not satisfy the condition of the position information input in S702, the contents processing section 113 ends the processing on information in the location element.

Then, the contents processing section 113 performs the above-described processing on all nodes in the input contents.

For example, a case where the above-described contents processing is carried out on the contents 600 shown in FIG.6 when position information "Tokyo" is input will be explained.

First, the contents processing section 113 inputs contents 600 in S701 and inputs position information in S702. Then, the contents processing section 113 searches for the root element of locationml, that is, <c: locationml> from the contents 600 in S703. Then, the contents processing section 113 carries out the processing in S704 and S705 and carries out the processing in S706 on the first child node. In the contents 600 in FIG.6, a name space prefix "c:" is affixed to the tag of the same name space as locationml, and so a tag without "c:" is decided to be a text node. In the contents 600, since the first child node is <html> followed by <head>, these nodes are decided to be text nodes and output in S707.

Then, the contents processing section 113 carries out the processing in S708 and S705 and carries out the processing in S706 on the next child node. Since the next child node is <c: location> and "c:" is described, the contents processing section 113 moves on to the processing in S709. Since this node is a location element, the contents processing section 113 moves on to the processing in S712. Then, in S712, the contents processing section 113 decides whether the attribute "type", attribute "content" and attribute "range" of the location element (only attribute "type" and attribute "content" in the case of FIG.6) satisfy the condition of the position information input in S702 or not. In this example, the position information described in the contents 600 is "Tokyo," they satisfy the condition. Thus, the contents processing section 113 searches for the description section "Weather forecast of Tokyo tomorrow - minimum temperature 25°C" which is a child node of the location element (S713) and moves on to the processing in S705 and S706 and outputs the child node of the location element because it is a text node.

Furthermore, the contents processing section 113 searches for the next child node in S708 and carries out the processing from S705 onward. Then, in S706, the next child node is <c: location> and "c:" is described, and therefore the contents processing section 113 moves on to the processing in S709. Since this node is a location element, the contents processing section 113 moves on to the processing in S712. Then in S712, the contents processing section 113 decides whether the attribute "type" and attribute "content" of the location element satisfy the condition of the position information input in S702 or not. In this example, the position information described in the contents 600 is Kanagawa Prefecture, they do not meet the condition. Thus, the contents processing section 113 moves on to S708 and does not carry out any processing on the description of the child node of this location element. Then, the contents processing section 113 moves on to the processing from S705 onward. In the case of the contents 600, since all the nodes from the node whose position information is the location element of Kanagawa Prefecture onward are text nodes, the contents processing section 113 outputs all nodes from the node with the location element onward in S707.

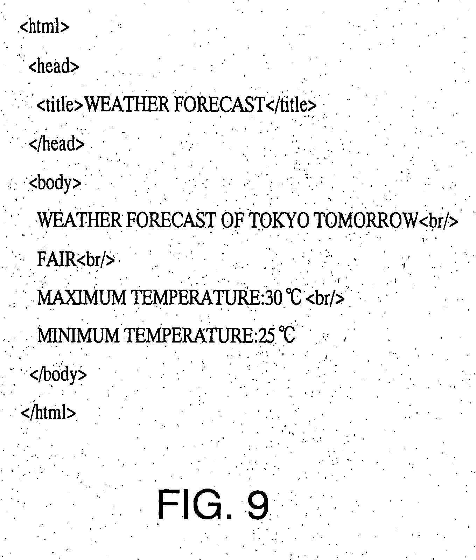

In this way, when position information "Tokyo" is input for the contents example shown in FIG.6, the content shown in FIG.9 is output.

As shown above, according to Embodiment 1, it is possible to extract only document data corresponding to the position information from one content input. This allows the user to pick up only the document data corresponding to desired position information from one content.

Furthermore, according to Embodiment 1, it is possible to specify the position information as the inside of a polygon made up of at least three vertices specified by latitudes and longitudes, as the inside of a polygon made up of at least three vertices specified by latitudes and longitudes, as an area corresponding to a postal code or as an area corresponding to the address. This allows the user who has specified a position in the area to obtain only the document data associated with the area.

Furthermore, according to Embodiment 1, it is possible to specify an effective range for the position information and thereby associate the contents with the area where the effective range has been added to the specified position information and allow the user who has specified the position in the area to obtain only the document data associated with the area.

Furthermore, according to Embodiment 1, describing the contents 105 based on DTD of XML makes it possible not only to make the contents 105 applicable to general purposes but also to construct a plurality of position information pieces and document data associated with these position information pieces for one content 105 as shown in FIG.6. This allows one content to be provided with information associated with each of a plurality of position information pieces without creating a plurality of contents for every position information piece. As a result, it is possible to store more contents 105 in the database 101.

Furthermore, according to Embodiment 1, the position information detection section 112 automatically detects the current position information and inputs it to the contents processing section 113, and therefore the user need not enter the current position information manually and the user can automatically obtain appropriate document data for the current position without being aware of the current position.

Furthermore, Embodiment 1 allows the contents processing apparatus 103 to extract the document data corresponding to the position information and therefore the contents providing apparatus 102 only needs to perform processing of simply extracting and sending contents according to the contents request information. This alleviates the processing of the contents providing apparatus 102. For a system in which many contents processing apparatuses 103 send requests to the contents providing apparatus 102, the contents providing apparatus 102 needs to perform processing on many contents processing apparatuses 103, which possibly overloads the processing, and therefore it is possible to alleviate the processing of the contents processing apparatus 102 and distribute the processing to the contents processing apparatus 103 side. As a result, it is possible to provide contents smoothly.

By the way, Embodiment 1 has explained the contents processing section 113 as a dedicated processing section, but it is also possible to adopt a mode in which the processing carried out by the contents processing section 113 is written as a program, stored in a storage section, and a computer (CPU) reads this program from the storage section and executes the program.

Furthermore, Embodiment 1 has explained a mode in which the contents processing apparatus 103 extracts document data corresponding to position information detected by the position information detection section 112 from the contents 105, but it is also possible to adopt a mode in which the contents providing apparatus 102 extracts the document data corresponding to the position information detected by the position information detection section 112 from the contents 105 and sends the extracted document data to the contents processing apparatus 103.

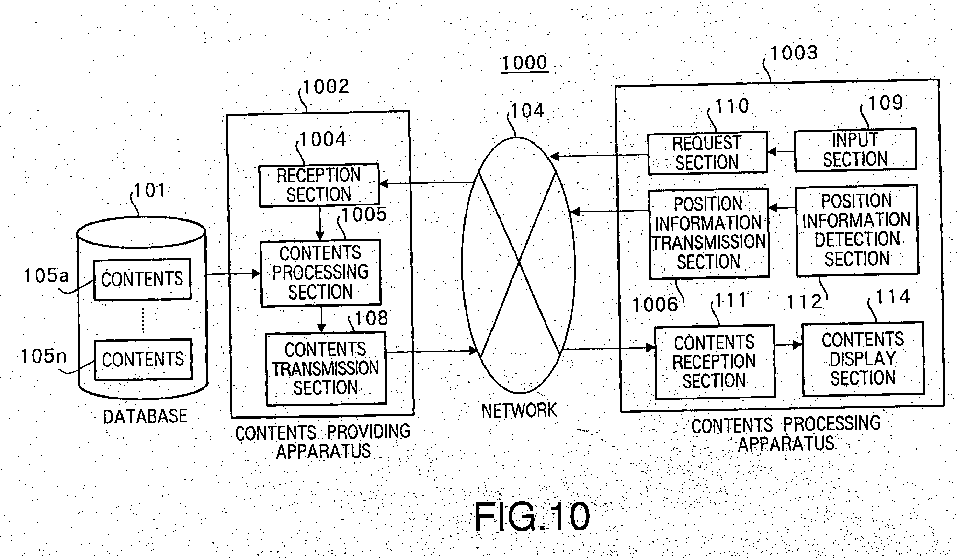

Another example of the contents providing system according to Embodiment 1 will be explained using FIG.10 below. FIG.10 is a block diagram showing a configuration of the contents providing system according to another example of Embodiment 1.

A contents processing apparatus 1003 of a contents providing system 1000 sends position information detected by a position information detection section 112 to a contents providing apparatus 1002 through a position information transmission section 1006 and a network 104.

On the other hand, the contents providing apparatus 1002 allows a reception section 1004 to receives the contents request information and position information sent from the contents processing apparatus. Then, the reception section 1004 outputs the received contents request information and position information to a contents processing section 1005.

The contents processing section 1005 inputs the contents request information and position information and inputs the contents corresponding to the contents request information from a database. Then, the contents processing section 1005 extracts document data corresponding to the position information input from the input contents. In this case, the contents processing section 1005 carries out the processing similar to the document data extraction processing carried out by the contents processing section 113 shown in FIG.1.

Then, the contents processing section 1005 sends the extracted document data to the contents transmission section 108. Then, the contents transmission section 108 sends the transmitted document data to the contents processing apparatus 1003 through the network 104.

The contents processing apparatus 1003 allows the contents reception section 111 to receive the transmitted document data and allows the contents display section 114 to display the document data.

As described above, in the other example of Embodiment 1, the contents processing apparatus 1003 can obtain document data corresponding to the position information from the contents 105.

By the way, Embodiment 1 has explained the mode in which the contents processing apparatus 103 inputs the contents request information from the input section 109 and sends it to the contents providing apparatus 102, but it is also possible to adopt a mode such as broadcasting in which contents are sent unilaterally to the contents processing apparatus 103

In this mode, the contents processing apparatus 103 extracts desired contents from the received contents and extracts document data corresponding to the position information from these extracted contents.

### (Embodiment 2)

Embodiment 2 of the present invention adopts apparatus information as a predetermined element used to extract document data from contents received by a contents processing apparatus. Moreover, one content describes a plurality of apparatus information pieces and document data corresponding to the apparatus information pieces.

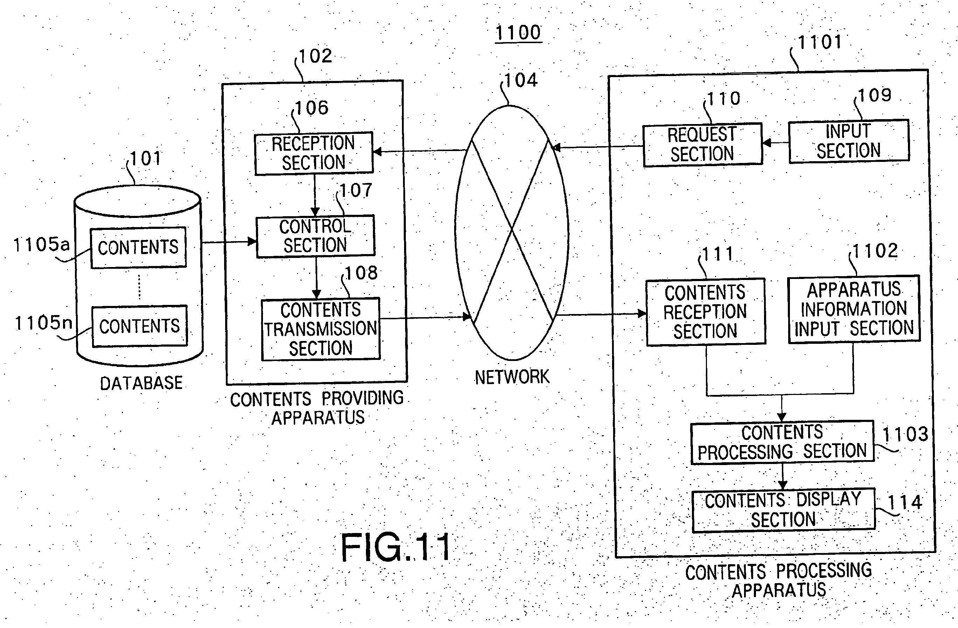

The contents providing system according to Embodiment 2 will be explained below. First, the configuration of the contents providing system according to Embodiment 2 will be explained using FIG.11. FIG.11 is a block diagram of the contents providing system according to Embodiment 2. The same parts as those already explained are assigned the same reference numerals and explanations thereof will be omitted.

A contents processing apparatus 1101 of the contents providing system 1100 according to Embodiment 2 is provided with an apparatus information input section 1102. The apparatus information input section 1102 stores apparatus information on the classification and model of the contents processing apparatus 1101 beforehand and sends the apparatus information to a contents processing section 1103 as required.

The contents processing section 1103 inputs the contents 1105 output from the contents reception section 111 and the apparatus information output from the apparatus information input section 1102, extracts the document data corresponding to the input apparatus information from the contents 1105 and outputs the document data to a contents display section 114.

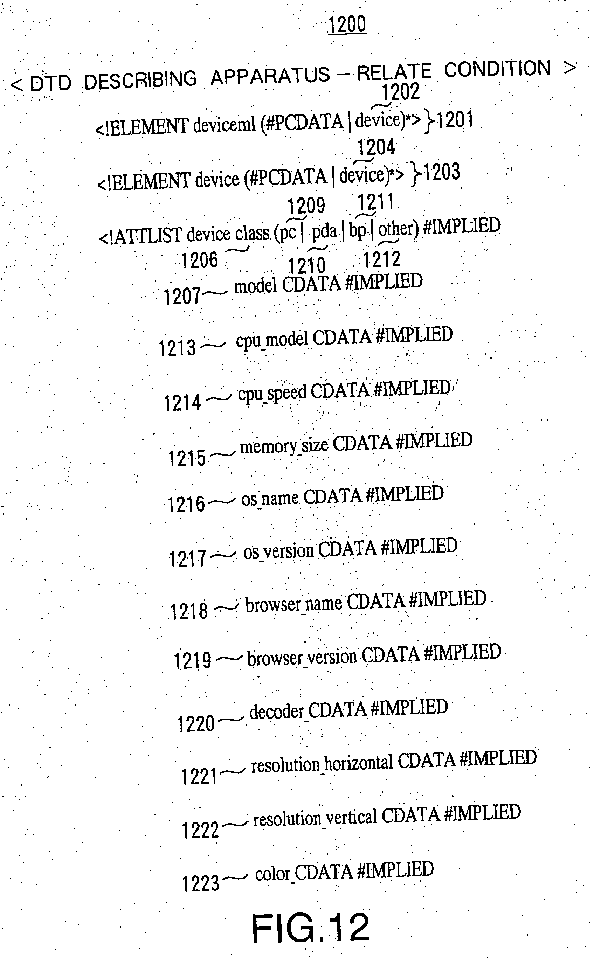

Then, contents 1105a to 1105n according to Embodiment 2 will be explained more specifically using FIG. 12. FIG.12 illustrates a definition and description of contents according to Embodiment 2.

As shown in FIG. 12, a contents description definition 1200 is written in DTD of XML.

As indicated by reference numeral 1201 in the figure, the contents description definition 1200 defines that the contents 1105 includes deviceml as an element and the element "deviceml" describes text data and 0 or more elements "device" 1202 that describe apparatus information as child elements in an arbitrary sequence.

Furthermore, as indicated by reference numeral 1203 in the figure, the contents description definition 1200 defines that the element "device" 1202 describes text data and 0 or more elements "device" 1204 that describe apparatus information as child elements in an arbitrary sequence. In this way, the element "device" 1202 is structured in such a way as to include the elements "device" 1204 as child elements, and therefore it is possible for the element "device" 1202 to specify rough apparatus information to allow the child element "device" 1204 to specify detailed apparatus information.

Furthermore, as shown in the figure, the elements "device" 1202 and 1204 are defined to include attribute "class" 1206 and attribute "model" 1207 indicating a method for describing apparatus information. Furthermore, the attribute "class" 1206 and attribute "model" 1207 are omissible elements.

Furthermore, the attribute "class" 1206 can be specified by any one of methods whose apparatus information is pc 1209 indicating a personal computer or notebook personal computer, pda 1210 indicating a portable information terminal, bp 1211 indicating a cellular phone and other 1212 indicating other apparatuses.

Furthermore, it is also possible to specify the apparatus information using the attribute "model" 1207. When the apparatus information is specified using the attribute "model" 1207, the apparatus information is described in the attribute "model" 1207 with text data.

Furthermore, it is also possible to specify the apparatus information using an attribute "cpu_model" 1213. When the apparatus information is specified using the attribute "cpu_model 1213", the name of a cpu that implements the contents processing section 1103 is described in the attribute cpu_model 1213 with text data.

Furthermore, it is also possible to specify the apparatus information using an attribute "cpu_speed" 1214. When the apparatus information is specified using the attribute "cpu_speed" 1214, the processing speed of the cpu that implements the contents processing section 1103 is described in the attribute "cpu_speed" 1214 with text data.

Furthermore, it is also possible to specify apparatus information using attribute "memory_size" 1215. When apparatus information is specified using the attribute "memory_size 1215", a storage capacity of memory (not shown) used by the contents processing section 1103 is described in the attribute "memory_size" 1215 with text data. In this way, the size of contents can be changed or the size of images included in the contents can be changed according to the memory size.

Furthermore, it is also possible to specify the apparatus information using attribute "os_name" 1216. When apparatus information is specified using the attribute "os_name" 1216, the name of the OS used by the contents processing apparatus 1101 is described in the attribute os_name 1216 with text data.

Furthermore, apparatus information can also be specified using attribute "os_version" 1217. When apparatus information is specified using the attribute "os_version" 1217, the version of the OS used by the contents processing apparatus 1101 is described in the attribute "os_version" 1217 with text data.

Furthermore, apparatus information can also be specified using attribute "browser_name" 1218. When apparatus information is specified using the attribute "browser_name" 1218, the name of the browser used by the contents processing apparatus 1101 is described in the attribute "browser_name" 1218 with text data.

Furthermore, apparatus information can also be specified using attribute "browser_version" 1219. When apparatus information is specified using the attribute "browser version" 1219, the version of the browser used by the contents processing apparatus 1101 is described in the attribute "browser_version" 1219 with text data.

Thus, the size of contents may be changed or an image to be added to the contents may be changed according to the browser.

Furthermore, apparatus information can also be specified using an attribute "decoder" 1220. When apparatus information is specified using the attribute "decoder" 1220, a decoder that can be used by the contents processing apparatus 1101, for example, MPEG2, MPEG4 is described in "decoder" 1220 with text data.

Furthermore, apparatus information can also be specified using an attribute "resolution_horizontal" 1221. When apparatus information is specified using the attribute "resolution_horizontal" 1221, the horizontal resolution of the contents display section 114 is described in "resolution_horizontal" 1221 with text data.

Furthermore, apparatus information can also be specified using an attribute "resolution_vertical" 1222. When apparatus information is specified using the attribute "resolution_vertical" 1222, the vertical resolution of the contents display section 114 is described in "resolution_vertical" 1222 with text data.

Furthermore, apparatus information can also be specified using an attribute "color" 1223. When apparatus information is specified using the attribute "color" 1223, the colors that can be displayed by the contents display section 114 are described in "color" 1223 with text data. For example, the number of colors is described in "color" 1223.

Thus, it is possible to associate with the contents the processing capacity of the contents processing section 1103, display capacity of the contents display section 114, browser information used by the contents processing apparatus 1101 and decoder information that can be used by the contents processing apparatus 1101 as apparatus information. By the way, information other than the information described above can also be used as apparatus information.

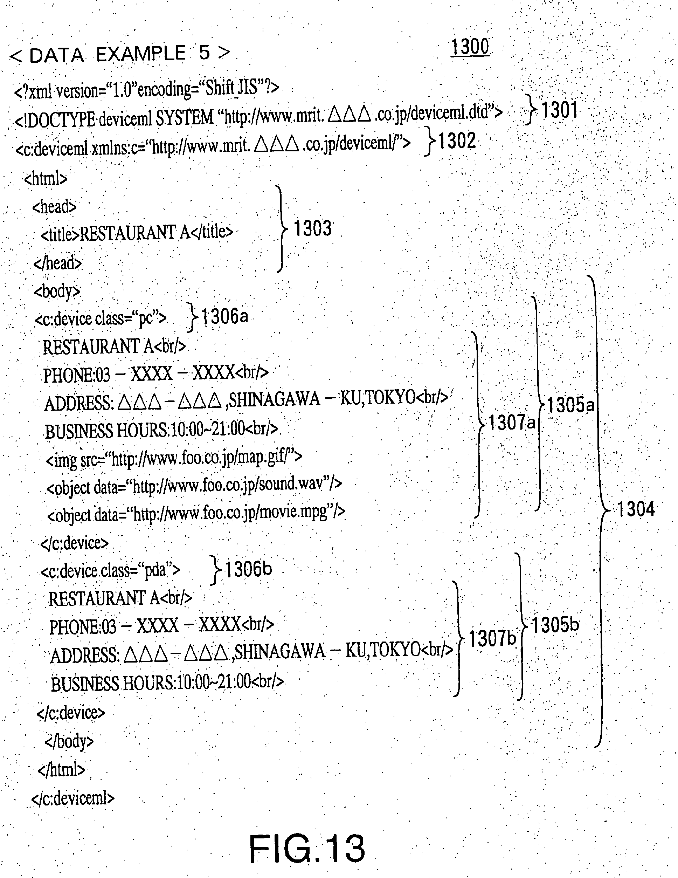

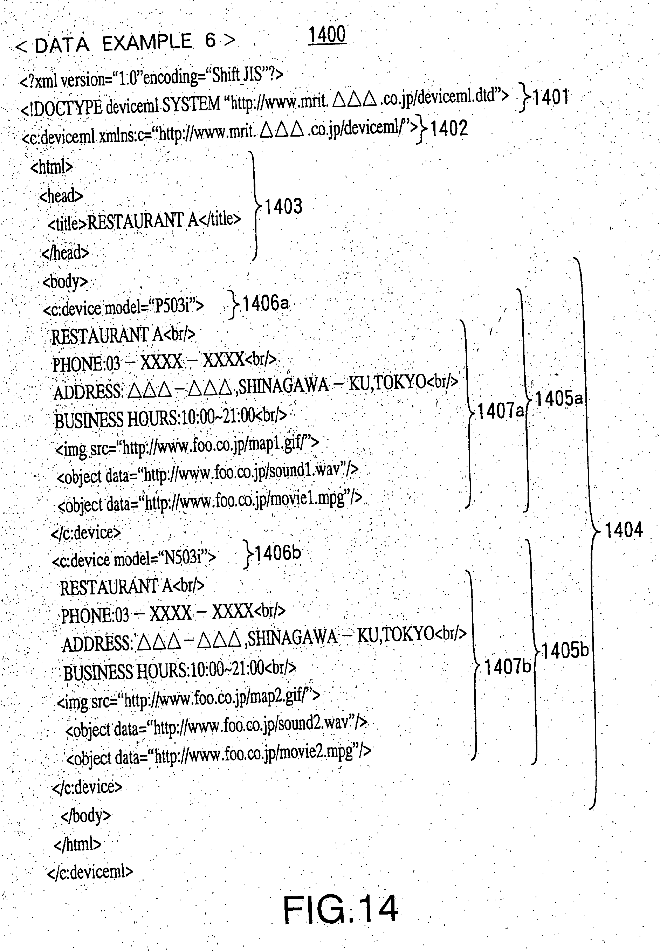

Next, the description of the contents created using the contents description definition shown in FIG.12 will be explained using FIG.13 and FIG.14. FIG.13 and FIG.14 illustrate the contents description according to Embodiment 2.

First, the contents description described in FIG.13 will be explained. In the contents description 1300, reference numeral 1301 in the figure specifies a URL for storing a DTD "deviceml" used. Furthermore, reference numeral 1302 in the figure specifies not only the name space but also the root element of the element "deviceml" that belongs to the name space.

As indicated by reference numeral 1303 in the figure, the contents description 1300 describes "restaurant A" as the title of the header section enclosed by head tags.

Furthermore, the contents description 1300 describes an element "device" which is an element of the name space specified by reference numeral 1302 in the figure and a child element of deviceml in the body section enclosed by body tags indicated by reference numeral 1304 in the figure (portions 1305a, 1305b in the figure).

Furthermore, as indicated by reference numeral 1306a in the figure, for the element "device", PC is specified with an attribute "class." Furthermore, for the element "device" indicated by reference numeral 1306b in the figure, pda is specified with the attribute "class." Thus, the above-described apparatus information is Specified for the contents 1300.

Furthermore, as indicated by reference numeral 1307a in the figure, the element "device" 1306a describes "restaurant A ∼ <img src="http://www:foo.co.jp/map.gif/"><object data="http://www.foo.co.jp/sound.wav"/><object data="http://www.foo.co.jp/movie.mpg"/>" as document data. Furthermore, as indicated by reference numeral 1307b in the figure, the element "device" 1306b describes "restaurant A ∼ business hours: 10:00 to 21:00" as text (document) data. As is apparent from the figure, the document data whose apparatus information is pc describes URL on the restaurant A, while the document data whose apparatus information is pda describes no URL.

Thus, a plurality of appropriate document data pieces differing from one apparatus information piece to another is described in one content 1300.

Furthermore, the document data whose apparatus information is pc describes <img src="http://www:foo.co.jp/map.gif/"><object data="http://www.foo.co.jp/sound.wav"/><object data="http://www.foo.co.jp/movie.mpg"/>, which is associated with multimedia such as still image, sound and moving image, respectively.

Next, the contents description shown in FIG.14 will be explained. In the contents description 1400, reference numeral 1401 in the figure specifies a URL for storing DTD "deviceml" used. Furthermore, reference numeral 1402 in the figure specifies not only the name space but also the root element of the element "deviceml" that belongs to the name space.

Furthermore, as indicated by reference numeral 1403 in the figure, the contents description 1400 describes "restaurant A" as the title of the header section enclosed by head tags.

Furthermore, the contents description 1400 describes an element "device" which is an element of the name space specified by reference numeral 1402 in the figure and a child element of deviceml (portions 1405a, 1405b in the figure) in the body section enclosed by body tags indicated by reference numeral 1404.

Furthermore, as indicated by reference numeral 1406a in the figure, for the element "device", the name of a model "P503i" is specified with the attribute "model." Furthermore, for the element "device" indicated by reference numeral 1406b in the figure, a model name "N503i" is specified with the attribute "model". Thus, the apparatus information is specified for the contents 1400.

Furthermore, as indicated by reference numeral 1407a in the figure, the element "device" 1406a describes "restaurant A ∼ <img src="http://www:foo.co.jp/map1.gif/"><object data="http://www.foo.co.jp/sound1.wav"/><object data="http://www.foo.co.jp/movie1.mpg"/>" as document data. Furthermore, as indicated by reference numeral 1407b in the figure, element "device" 1406b describes "restaurant A ∼ <img src="http://www:foo.co.jp/map2.gif/"><object data="http://www.foo.co.jp/sound2.wav"/><object data="http://www.foo.co.jp/movie2.mpg"/>" as text (document) data. As is apparent from the figure, different URLs on restaurant A are described depending on the apparatus information.

Thus, the contents descriptions 1300 and 1400 are written in a structure description language that consists of the element "device" indicating the apparatus information and the document data associated with the element "device" within element "deviceml".

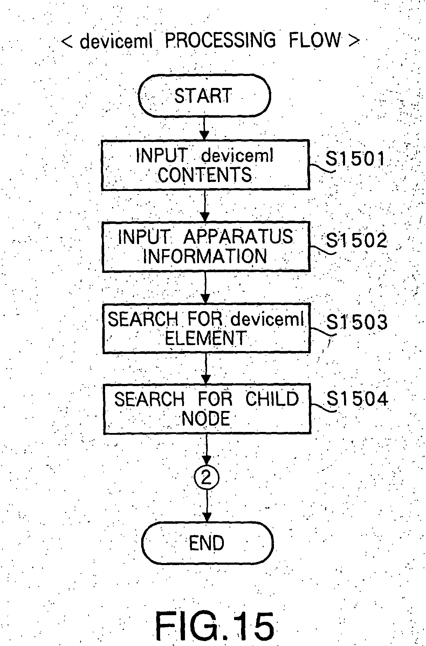

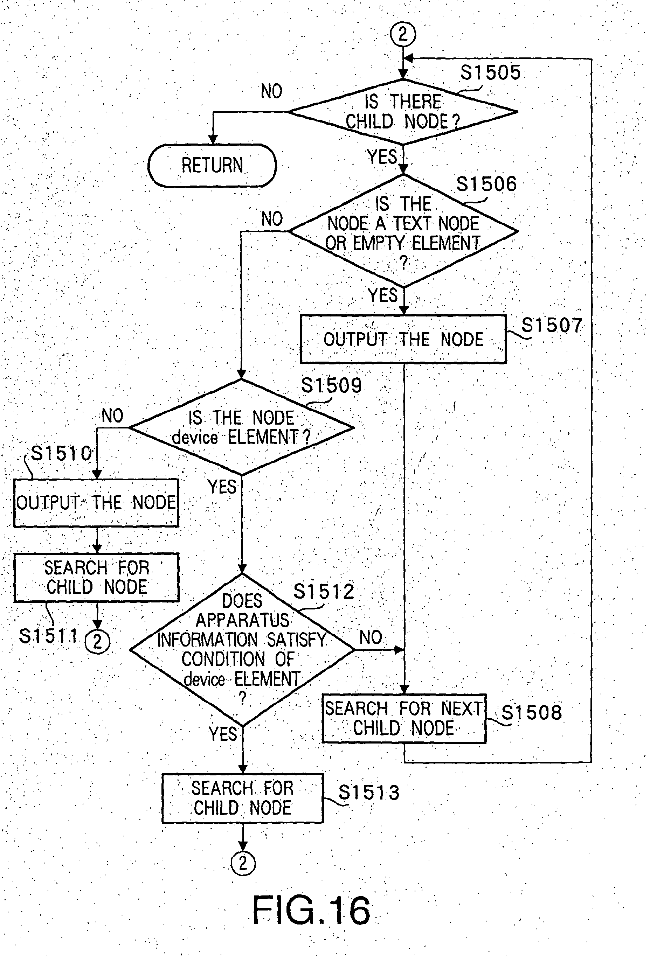

Next, the contents processing of the contents processing apparatus 1101 will be explained in detail using FIG.15 and FIG.16. FIG.15 and FIG.16 are flow charts of the contents processing of the contents processing apparatus according to Embodiment 2.

First, the contents processing apparatus 1101 sends the contents request information input through the input section 109 to the contents providing apparatus 102 from the request section 110 through the network. Next, the contents processing apparatus 1101 receives the contents sent from the contents providing section 102 in response to this contents request information transmitted, deviceml contents in this case, at the contents reception section 111.

Next, the contents reception section 111 outputs the deviceml contents to the contents processing section 1103 and the contents processing section 1103 inputs the deviceml contents described based on the contents definition shown in FIG.12 (S1501).

Next, the apparatus information input section 1102 outputs the apparatus. information on the contents processing apparatus 1101 to the contents processing section 1103. The contents processing section 1103 inputs this (S1502).

Next, the contents processing section 1103 searches for the root element of deviceml from the deviceml contents input in S1501 (S1503).

Next, the contents processing section 113 searches for a child node in the deviceml root element (S1504) to decide whether the child node exists or not (S1505). When there is no child node in the devicem1 root element, the contents processing section 1103 ends the processing, and when the child node exists, the contents processing section 1103 decides whether the child node is a text node which is a node in a name space different from devicem1 or an empty element (S1506). Then, when the child node is a text node or empty element, the contents processing section 1103 outputs the child node to the contents display section 114 (S1507). Then, the contents processing section 1103 searches for the next child node of the devicem1 element (S1508) and moves on to the processing in S1505.

On the other hand, in S1506, when the child node is neither a text node nor empty element, the contents processing section 1103 decides whether the node is a device element or not (S1509).

Then, in S1509, when the contents processing section 1103 decides that the child node is not a device element, the contents processing section 1103 outputs the node to the display section 114 (S1510), searches for the next child node (S1511) and moves on to the processing in S1505.

On the other hand, in S1509, when the contents processing section 1103 decides that the child node is a device element, it decides whether the attribute "class" or attribute "model" of this device element satisfies the condition of the apparatus information input in S1502 (S1512). In S1512, when the contents processing section 1103 decides that the attribute "class" or attribute "model" of this device element satisfies the condition of the apparatus information input in S1502, the contents processing section 1103 searches for the child node of this device element (S1513) and moves on to the processing of S1505. Then, in S1506, when the contents processing section 1103 decides that the child node of this device element is either a text node or empty element, the contents processing section 1103 outputs the child node of this device element to the contents display section 114 in S1507. That is, it outputs the document data of this device element.

On the other hand, in S1512 when the contents processing section 1103 decides that the attribute "class" or attribute "model" of the device element does not satisfy the condition of the apparatus information input in S1502, the contents processing section 1103 searches for the next child node (S1508) and moves on to the processing from S1505 onward. That is, when the attribute of the device element does not satisfy the condition of the apparatus information input in S1502, the contents processing section 1103 ends the processing on this device element.

Then, the contents processing section 1103 carries out the above-described processing on all nodes in the contents input.

For example, a case where the above-described contents processing is carried out when apparatus information "pc" is input to the contents 1300 shown in FIG.13 will be explained.

First, in S1501, the contents processing section 1103 inputs the contents 1300 and inputs the apparatus information in S1502. Next, in S1503, the contents processing section 1103 searches for the root element of deviceml, that is, <c: deviceml> from the contents 1300. Then, the contents processing section 1103 carries out the processing in S1504 and S1505, and carries out the processing in S1506 on the first child node. In the contents 1300 in FIG. 13, a name space prefix "c:" is affixed to the tag of the same name space as deviceml, and therefore the contents processing section 1103 decides that any tag without "c:" is a text node. Since the first child node of the contents 1300 is <html> and the next one is <head>, the contents processing section 1103 decides that these nodes are text nodes and outputs them in S1507.

Next, the contents processing section 1103 carries out processing in S1508 and S1505, and carries but processing on the next child node in S1506. Since the next child node is <c: device> and "c:" is described, the contents processing section 1103 moves on to the processing in S1509. Since this node is a device element, the contents processing section 1103 moves on to the processing in S1512. Then, in S1512, the contents processing section 1103 decides whether the attribute "class" or attribute "model" of the device element (attribute "class" only in the case of FIG.13) satisfies the condition of the apparatus information input in S1502 or not. In this example, since the apparatus information described in the contents 1300 is pc, the attribute "class" or attribute "model" of the device element meets the condition. Therefore, the contents processing section 1103 searches for the description section of "restaurant A ∼ <img src="http://www:foo.co.jp/map.gif/">" which is a child node of this device element (S1513) and moves on to the processing in S1505 and S1506, and since the child node of this device element is a text node, it outputs this child node in S1507.

Furthermore, in S1508, the contents processing section 1103 searches for the next child node and carries out the processing from S1505 onward. Then, in S1506, since the next child node is <c: device> and "c:" is described, the contents processing section 1103 moves on to the processing in S1509. Since this node is a device element, the contents processing section 1103 moves on to the processing in S1512. Then in S1512, it decides whether the attribute "class" of the device element satisfies the condition of the position information input in S1502 or not. In this example, the apparatus information described in the contents 1300 is pda, the attribute "class" of the device element does not satisfy the condition. Therefore, the contents processing section 1103 moves on to S1508 and does not perform any processing on the description of the child node of this device element. Then, it moves on to the processing from S1505 onward, but in the case of the contents 1300, all nodes from the node with the device element whose apparatus information is pda onward are text nodes, and therefore the contents processing section 1103 outputs all nodes from the node with the device element onward in S1507.

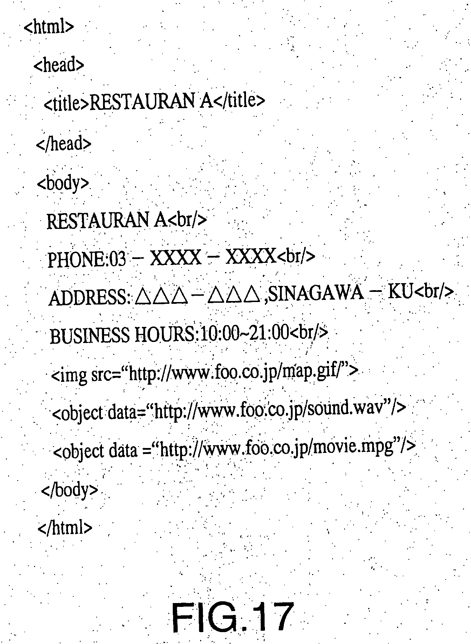

Thus, when the apparatus information "pc" is input to this contents example shown in FIG.13, the contents shown in FIG.17 are output.

As is apparent from FIG.17, the contents are associated with a still image, sound, moving image in addition to text.

As described above, according to Embodiment 2, it is possible to extract only document data corresponding to the apparatus information input by the user from one content input.

Furthermore, according to Embodiment 2, by describing the contents 1105 based on DTD of XML, it is possible not only to make the contents 1105 applicable to general purposes but also construct a plurality of apparatus information pieces and document data associated with these apparatus information pieces for the contents 1105 as shown in FIG.13 and FIG.14. In this way, it is possible to provide one content with information associated with each of the plurality of apparatus information pieces without creating a plurality of contents for each of apparatus information pieces. As a result, it is possible to store more contents 1105 in the database 101.

Embodiment 2 associates a still image, sound, and moving image with contents but it is also possible to associate multimedia data other than them with contents.

### (Embodiment 3)

Embodiment 3 of the present invention adopts time information as a predetermined element used when the contents processing apparatus extracts document data from the contents received. Moreover, one content describes a plurality of time information pieces and document data corresponding to the time information pieces.

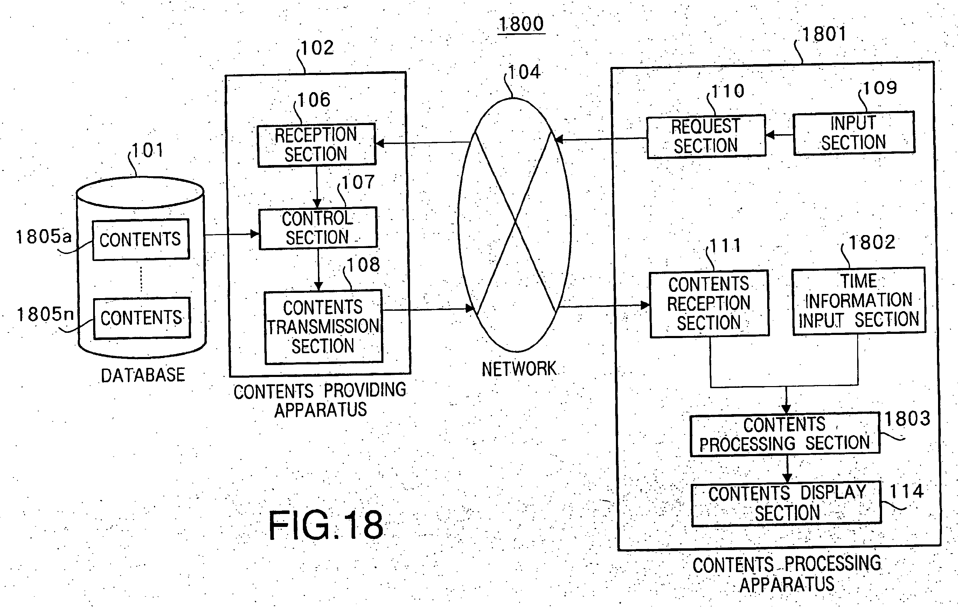

A contents providing system according to Embodiment 3 will be explained below. First, the configuration of the contents providing system according to Embodiment 3 will be explained using FIG.18. FIG.18 is a block diagram of the contents providing system according to Embodiment 3. By the way, the same parts as those already explained are assigned the same reference numerals and explanations thereof will be omitted.

A contents processing apparatus 1801 of the contents providing system 1800 according to Embodiment 3 is provided with a time information input section 1802. The time information input section 1802 is means for the user to input time information as required and outputs the input time information to a contents processing section 1803.

The contents processing section 1803 receives contents 1805 output from a contents reception section 111 and time information output from the time information input section 1802, extracts the document data corresponding to the input time information from the input contents 1805 and outputs it to a contents display section 114.

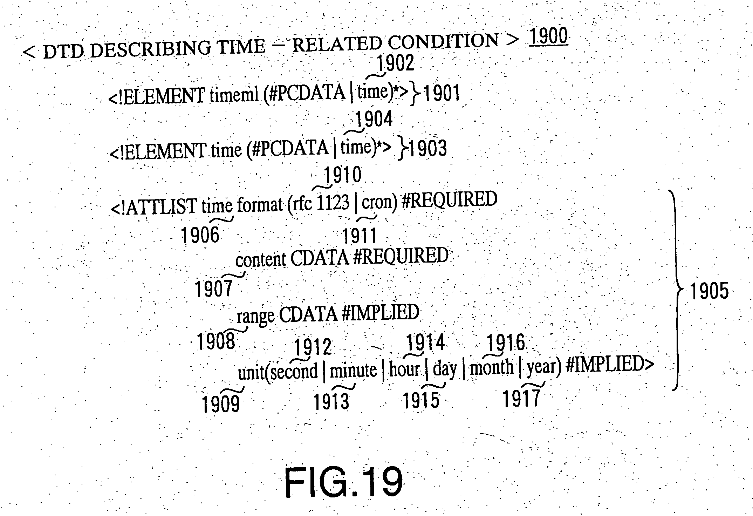

Next, contents 1805a to 1805n according to Embodiment 3 will be explained more specifically using FIG.19. FIG.19 illustrates a definition and description of the contents according to Embodiment 3.

As shown in FIG.19, a contents description definition 1900 is written in DTD (Document Type Definition) of XML (eXtensible Markup Language).

As indicated by reference numeral 1901 in the figure, the contents description definition 1900 defines that contents 1805 has timeml as an element and the element timem1 describes text data and 0 or more elements "time" 1902 which describe time information as child elements in an arbitrary sequence.

Furthermore, as indicated by reference numeral 1903 in the figure, the contents description definition 1900 defines that an element "time" 1902 describes text data and 0 or more elements "time" 1904 which describe time information as child elements in an arbitrary sequence. Since the element "time" 1902 has a structure haying elements "time" 1904 as child elements, it is possible to specify time information with a greater range through the element "time" 1902 and specify time information whose range is narrowed by the child element "time" 1904.

Furthermore, as indicated by reference numeral 1905 in the figure, the elements "time" 1902 and 1904 are defined to include an attribute "format" 1906 indicating a method for describing time information, attribute "content" 1907 indicating the entity of time information described according to the attribute "format" 1906, attribute "range" 1908 indicating the range of time information and attribute "unit" 1909 indicating the unit of the value specified by the attribute "range" 1908. Furthermore, the attribute "format" 1906 and attribute "content" 1907 are attributes essential to be described, while the attribute "range" 1908 and attribute "unit" 1909 are omissible elements.

Furthermore, the attribute "format" 1906 describes a method of specifying time information. More specifically, for the attribute "format" 1906, it is possible to specify time information by any one of methods of rfc 1123 1901 and cron 1911.

The rfc 1123 1910 is a method for describing time information described in RFC 1123, which is a standardization document issued by the Internet-related standardization organization (Internet Engineering Task Force) and can designate a specific time as time. Furthermore, the attribute "content" 1908 describes the time information according to the description method defined in the above standard. Furthermore, the attribute "range" 1908 describes the range from the time information described in the attribute "content" 1907. Furthermore, the attribute "unit" 1909 describes the unit in the range described in the attribute "range" 1908. More specifically, "second" 1912 indicating seconds, "minute" 1913 indicating minutes, "hour" 1914 indicating hours, "day" 1915 indicating day, "month" 1916 indicating month and "year" 1917 indicating year are described.

Furthermore, the "cron" 1911 is a method of specifying the time for crontab which is a file for setting a command cron for executing a program in a cyclic time by a UNIX-based (R) OS and can specify the cyclic time using "cron" 1911. Furthermore, for the attribute "content" 1907, time information is described according to the specification method defined by the "cron" 1911. More specifically, a 5-digit number is described in the attribute "content" 1907 representing minute, hour, month, day, and day of the week starting from the first digit. Numbers 0 to 6 are input to the day of the week, where 0 represents Sunday and 6 represents Saturday.

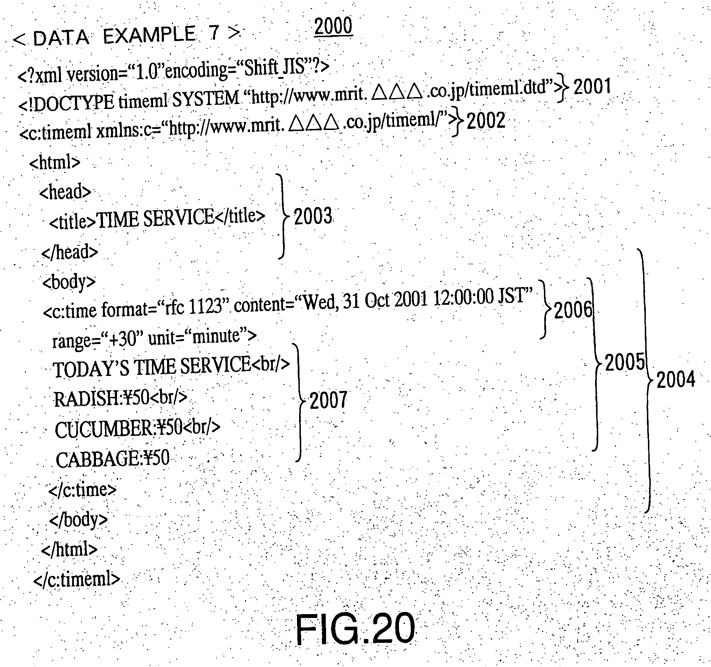

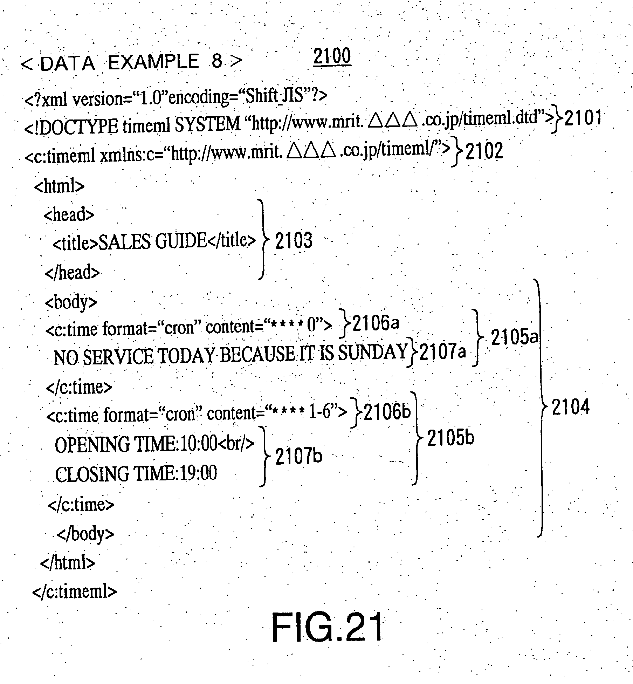

Next, the contents description created using the description definition of contents shown in FIG.19 will be explained using FIG.20 and FIG.21. FIG.20 and FIG.21 illustrate the contents description according to Embodiment 3.

First, the contents description described in FIG. 20 will be explained. In the contents description 2000, reference numeral 2001 in the figure specifies a URL for storing DTD "timeml" used. Furthermore, reference numeral 2002 in the figure specifies not only the name space but also the root element of the element "timeml" that belongs to the name space.

Furthermore, as indicated by reference numeral 2003 in the figure, the contents description 2000 describes "time service" as the title of the header section enclosed by head tags.

Furthermore, the contents description 2000 describes an element "time" which is an element of the name space specified by reference numeral 2002 in the figure and a child element of timeml in the body section enclosed by body tags (portion indicated by reference numeral 2005 in the figure).

Furthermore, as indicated by reference numeral 2006 in the figure, for element "time", rfc 1123 is specified in the attribute "format" and time information is described based on the description method of rfc 1123 with the attribute "content." Furthermore, +30 is described in the attribute. "range" as the effective range of time and "minute" indicating minute as the unit of the attribute "range" is described in the attribute "unit." Thus, the contents 2000 describes time information.

Furthermore, as indicated by reference numeral 2007 in the figure, element "time" 2006 describes "Today's time service ~ cabbage: ¥50" as document data.

Next, the contents description described in FIG.21 will be explained. In the contents description 2100, reference numeral 2101 in the figure specifies a URL for storing DTD "timeml" used. Furthermore, reference numeral 2102 in the figure specifies not only the name space but also the root element of the element "timeml" that belongs to the name space.

Furthermore, as indicated by reference numeral 2103 in the figure, the contents description 2100 describes "business guide" as the title in the header section enclosed by head tags.

Furthermore, the contents description 2100 describes an element "time" which is an element of the name space specified by reference numeral 2104 in the figure and a child element of time in the body section enclosed by body tags (portions 2105a, 2105b in the figure).

Furthermore, as indicated by reference numeral 2106a in the figure, for element "time", cron is specified with the attribute "format" and time information based on the cron description method is described with the attribute "content." More specifically, ****0, that is, time information "Sunday" is described. Furthermore, for an element "time" indicated by reference numeral 2106b in the figure, ****1-6, that is, time information "from Monday to Saturday" is specified with the attribute "content." Thus, time information is specified for the contents 2100.

Furthermore, as indicated by reference numeral 2107a in the figure, for element "time" 2106a, "No service today because it is Sunday" is described as document data. Furthermore, as indicated by reference numeral 2107b in the figure, for the element ''time" 2106b, "Opening time ∼ 19:00" is described as text (document) data.

Thus, the contents descriptions 2000 and 2100 are written in a structure description language consisting of an element "time" indicating time information and document data associated with the element "time" in the element "timeml."

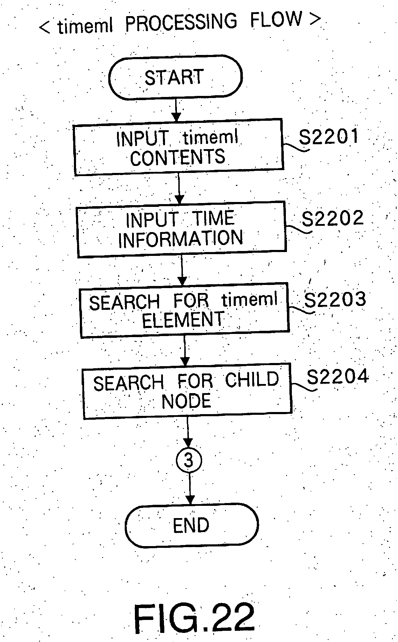

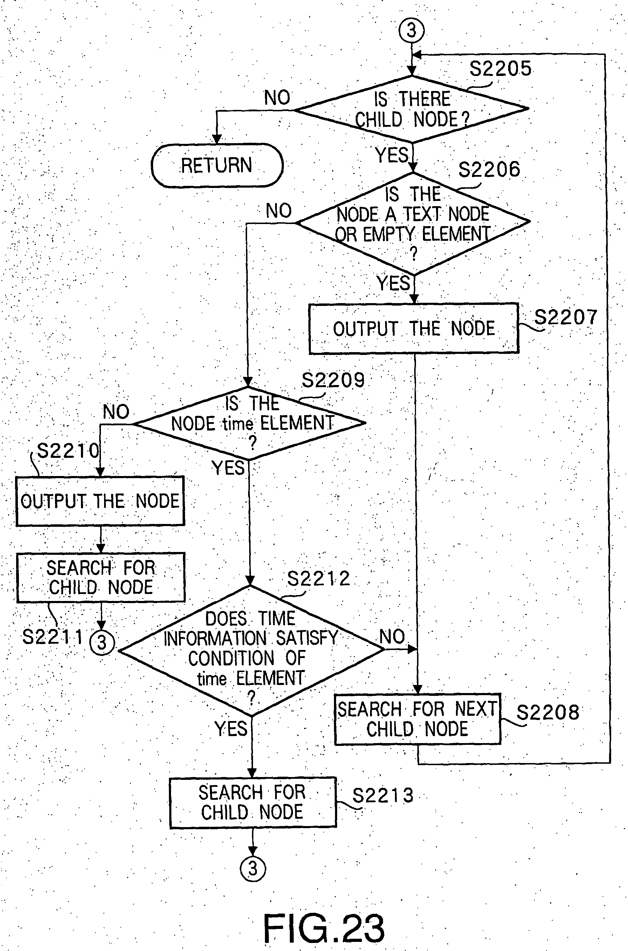

Next, the contents processing of the contents processing apparatus 1801 will be explained using FIG.22 and FIG.23 in detail. FIG.22 and FIG.23 are flow charts of the contents processing of the contents processing apparatus according to Embodiment 3.

First, the contents processing apparatus 1801 sends the contents request information input from the input section 109 to the contents providing apparatus 102 from the request section 110 through the network. Next, the contents processing apparatus 1801 receives the contents 1805 sent from the contents providing section 102 in response to this contents request information transmitted, timeml contents in this case, at the contents reception section 111. Next, the contents reception section 111 outputs the timeml contents to the contents processing section 1803 and the contents processing section 1803 inputs the timeml contents described based on the contents definition shown in FIG.19 (S2201).

Next, the time information input section 1802 outputs the time information requested by the user to the contents processing section 1803. The contents processing section 1803 inputs this (S2202).

Next, the contents processing section 1803 searches for the root element of timeml from the timeml contents input in S2201 (S2203).

Next, the contents processing section 1803 searches for child nodes in the timeml root element (S2204) and decides whether there are child nodes or not (S2205).

Then, when there is no child node in the root element of timeml, the contents processing section 1803 ends the processing and when there is a child node, the contents processing section 1803 decides whether the child node is a text node which is a node in the name space different from timeml or an empty element (S2206). Then, when the child node is a text node or empty element, the contents processing section 1803 outputs the child node to the contents display section 114 (S2207). Next, the contents processing section 1803 searches for the next child node of the timeml element (S2208) and moves on to the processing in S2205.

On the other hand, when the child node is neither a text node nor empty element in S2206, the contents processing section 1803 decides whether the node is a time element or not (S2209).

Then, when the contents processing section 1803 decides that it is not the time element in S2209, the contents processing section 1803 outputs the node to the contents display section 114 (S2210), searches for the next child node (S2211) and moves on to the processing in S2205.

On the other hand, when the contents processing section 1803 decides that the node is a time element in S2209, the contents processing section 1803 decides whether the attribute "format" of this time element, attribute "content", attribute "range" and attribute "unit" satisfy the condition of the time information input in S2202 (S2212). When the contents processing section 1803 decides in S2212 that the attribute "format" of this time element attribute "content", attribute "range" and attribute "unit" satisfy the condition of the time information input in S2202, the contents processing section 1803 searches for the child node of the time element (S2213) and moves on to the processing in S2205. Then, when the contents processing section 1803 decides in S2206 that the child node of this time element is a text node or empty element, it outputs the child node of this time element to the contents display section 114 in S2207. That is, the contents processing section 1803 outputs the document data of this time element.

On the other hand, in S2212, when the contents processing section 1803 decides that the attribute "format" of this time element, attribute "content", attribute "range" and attribute "unit" do not satisfy the condition of the time information input in S2202, the contents processing section 1803 searches for the next child node (S2208) and moves on to the processing from S2205 onward. That is, when the attribute of this time element does not satisfy the condition of the time information input in S2202, the contents processing section 1803 ends the processing on this time element.

Then, the contents processing section 1803 carries out the above-described processing on all nodes in the contents input.

For example, a case where the above-described contents processing is carried out when apparatus information "Wed, 31 Oct 2001 12:00:00 JST" is input to the contents 2000 shown in FIG.20 will be explained.

First, the contents processing section 1803 inputs the contents 2000 in S2201 and inputs an apparatus in S2202. Then, the contents processing section 1803 searches for the root element of timeml, that is, <c: timeml> from the contents 2000 in S2203. Then, the contents processing section 1803 carries out the processing in S2204 and S2205, and carries out the processing in S2206 on the first child node. In the contents 2000 in FIG. 20, a name space prefix"c:" is affixed to the same name space tag as that of timeml, and therefore the contents processing section 1803 decides that tags without "c:" are text nodes. Since the first child node of the contents 2000 is <html> and the next one is <head>, the contents processing section 1803 decides that these nodes are text nodes and outputs them in S2207.

Next, the contents processing section 1803 carries out the processing in S2208 and S2205, and carries out the processing in S2206 on the next child node. The next child node is <c:time> and "c:" is described, and therefore the contents processing section 1803 moves on to the processing in S2209. Then, since this node is a time element, the contents processing section 1803 moves on to the processing in S2212. Then in S2212, when the contents processing section 1803 decides that the node is a time element, it decides whether the attribute "format" of this time element, attribute "content", attribute "range" and attribute "unit" satisfy the condition of the time information input in S2202 or not. In this example, the time information described in the contents 2000 meets the condition. Therefore, the contents processing section 1803 searches for the description section of "Today's time service ∼ ¥50" which is the child node of this time element (S22), moves on to the processing in S2205 and S2206 and since the child node of the time element is a text node, the contents processing section 1803 outputs this child node in S2207.

Then, since all nodes from the node with the time element onward of the contents 2000 are text nodes, the contents processing section 1803 outputs nodes from the node with the time element onward in S2207.

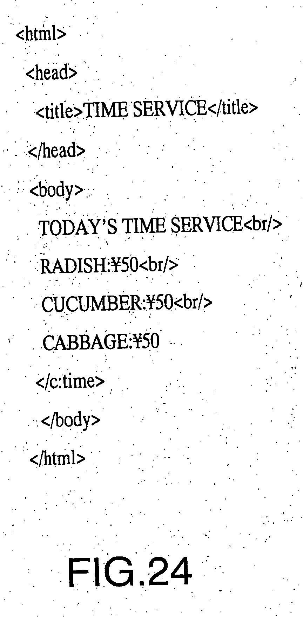

Thus, when the time information "Wed, 31 Oct 2001 12:00:00 JST" is input to the contents example shown in FIG.20, the contents shown in FIG.24 are output.

As described above, according to Embodiment 3, it is possible to extract only the document data corresponding to the time information input by the user from one content input.

Furthermore, according to Embodiment 3, time information can be specified as a specific time or cyclic time. This makes it possible to associate contents with a specific time or cyclic time and allows the user who has specified the time corresponding to these times to obtain only the document data associated with the cyclic time. Furthermore, this embodiment allows an effective range corresponding to the time information to be specified, it is possible to associate contents with the specified time or the time obtained by adding the effective range to the time and allow the user who has specified the time corresponding to the time to obtain the document data associated with the cyclic time.

Furthermore, by describing the contents 1805 based on DTD of XML, Embodiment 3 can not only make contents 1805 applicable to general purposes but also construct a plurality of time information pieces and document data associated with these time information pieces for one content 1805 as shown in FIG.21. In this way, without creating a plurality of contents for each time information piece, it is possible to provide one content with information associated with each of the plurality of time information pieces. As a result, it is possible to store more contents 1805 in the database 101.

By the way, Embodiment 3 uses the time information input section 1802 for the user to input desired time information as means for inputting time information, but it is also possible to adopt a mode using a time measuring section that measures the current time and automatically outputs the time. This embodiment makes it possible to automatically input the current time information without the user being aware of the time information and obtain the contents corresponding to the current time information.

### (Embodiment 4)

Embodiment 4 of the present invention adopts a combination of position information, apparatus information and time information as predetermined elements used to extract document data from the contents received by the contents processing apparatus.

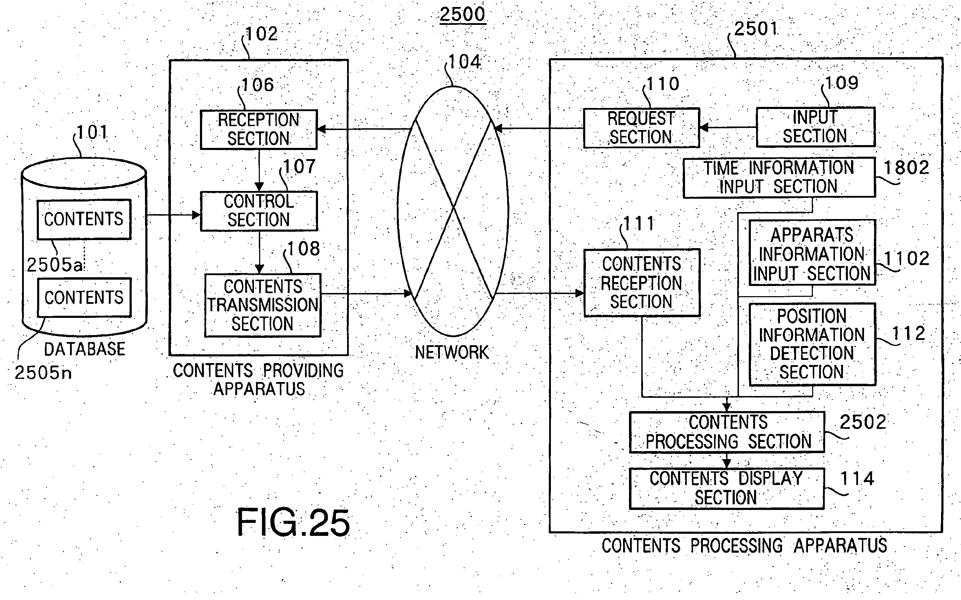

A contents providing system according to Embodiment 4 will be explained below. First, the configuration of the contents providing system according to Embodiment 4 will be explained using FIG.25. is a block diagram of the contents providing system according to Embodiment 4. The same parts as those already explained are assigned the same reference numerals and explanations thereof will be omitted.

A contents processing apparatus 2501 of the contents providing system 2500 according to Embodiment 4 is provided with a position information detection section 112, an apparatus information input section 1102 and time information input section 1802.

The contents processing section 2502 inputs contents 105 output from the contents reception section 111 and position information, apparatus information and time information output from the position information detection section 112, apparatus information input section 1102 and time information input section 1802, extracts document data corresponding to the input position information, apparatus information and time information from the contents 2505a to 2505n input and outputs the document data to the contents display section 114.

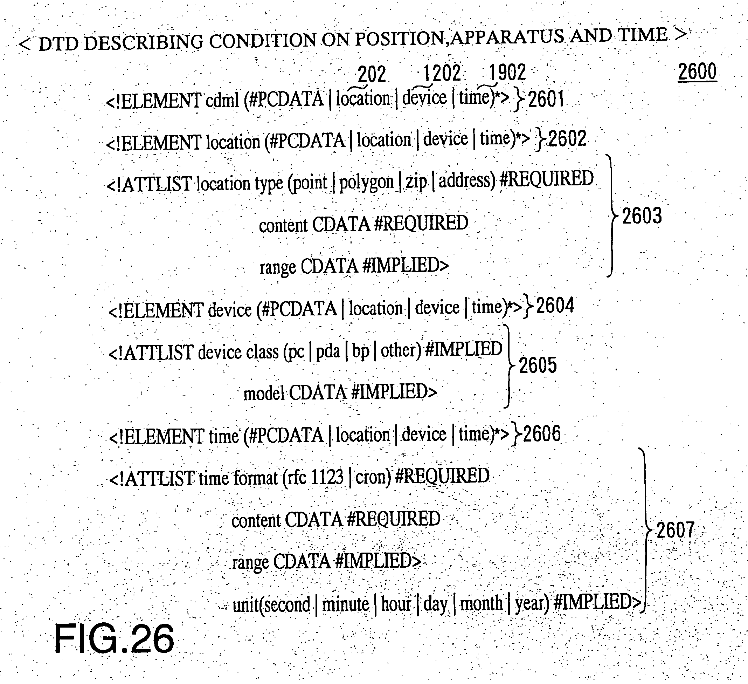

Next, the contents 2505a to 2505n according to Embodiment 4 will be explained using FIG.26 more specifically. FIG.26 illustrates a definition and description of contents according to Embodiment 4.

As shown in FIG.26, the contents description definition 2600 is written in DTD (Document Type Definition) of XML (eXtensible Markup Language).

As indicatedby reference numeral 2601 in the figure, the contents description definition 2600 defines that the contents 2505 includes cdml as an element and the element cdml describes text data and 0 or more elements "location" 202, elements "device" 1202 and "time" 1902 as child elements in an arbitrary sequence.

Furthermore, as indicated by reference numeral 2602 in the figure, the element "location" 2601 is defined to describe text data and 0 or more elements "location," elements "device" and elements "time" as child elements in an arbitrary sequence. This causes the element "location" 202 to have a structure of element "location," element "device" and element "time" as child elements. This makes it possible to describe elements using a combination of element "location" 202, child element "location," element "device" 1202 and element "time" 1902.

Furthermore, the contents description definition 2600 defines the attribute of element "location" as indicated by reference numeral 2603 in the figure. The attribute of the element "location" is the same as that of Embodiment 1, and therefore explanations thereof will be omitted.

Furthermore, as indicated by reference numeral 2604 in the figure, the element "device" 1202 is defined to describe text data and 0 or more elements "location," elements "device" and elements "time" as child elements in an arbitrary sequence. This causes the element "device" 1202 to have a structure of having the element "location," element "device" and element "time" as child elements, making it possible to describe elements using a combination of the element "device" 1202, element "location," element "device" and "time".

Furthermore, the contents description definition 2600 defines an attribute of element "device" as indicated by reference numeral 2605 in the figure. The attribute of the element "device" is the same as that in Embodiment 2, and therefore its explanation will be omitted.

Furthermore, as indicated by reference numeral 2606 in the figure, the element "time" 1902 is defined to include text data and 0 or more elements "location," element "device" and element "time" as child elements in an arbitrary sequence. This causes the element "time" 1902 to have a structure of having the element "location," element "device" and element "time" as child elements, and therefore it is possible to describe elements using a combination of the element "device" 1902, element "location," element "device" and "time."

Furthermore, the contents description definition 2600 defines the attribute of element "time" as indicated by reference numeral 2607 in the figure. The attribute of the element "time" is the same as that in Embodiment 3, and therefore its explanations will be omitted.

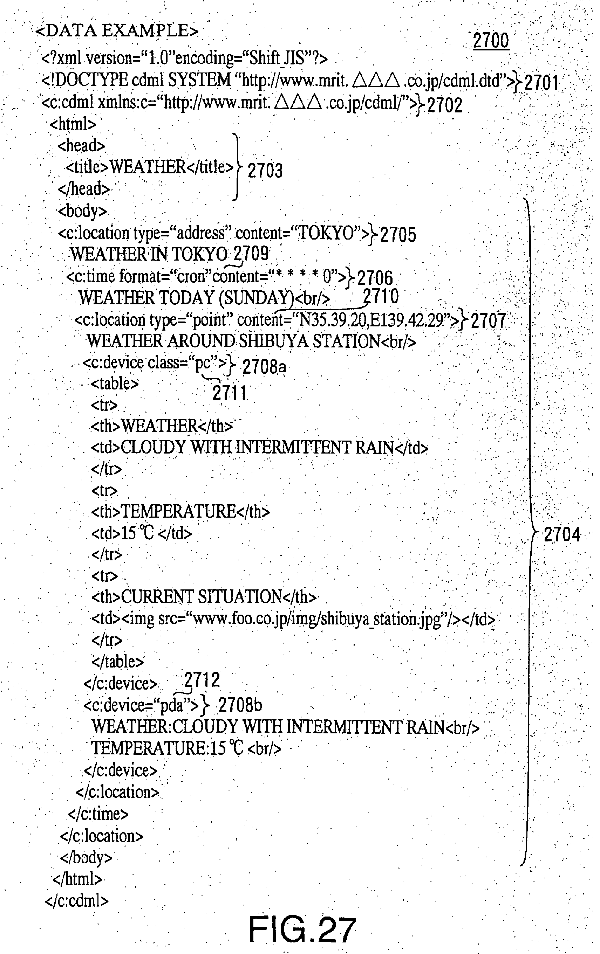

Next, the contents description created using the contents description definition shown in FIG.26 will be explained using FIG.27. FIG.27 illustrates the contents description according to Embodiment 4.

In the contents description 2700, reference numeral 2701 in the figure specifies a URL for storing DTD "cdml" used. Furthermore, reference numeral 2702 in the figure specifies not only the name space but also the root element of an element "cdml" that belongs to the name space.

Furthermore, as indicated by reference numeral 2703 in the figure, the contents description 2700 describes "weather" as the title in the header section enclosed by head tags.

Furthermore, the contents description 2700 describes an element "location" which is an element of the name space specified by reference numeral 2702 in the figure and a child element of an element "cdml" in the body section enclosed by body tags indicated by reference numeral 2704 in the figure (reference numeral 2705 in the figure). Then, the element "location" describes position information and document information as attributes.

Furthermore, as indicated by reference numeral 2706 in the figure, the element "location" describes an element "time" which is a child element of the element "cdml" as a child element. Then, the element "time" describes time information and document information as attributes.

Furthermore, as indicated by reference numeral 2707 in the figure, the element "time" describes an element "location" which is a child element of the element "cdml" as a child element. Then, the element "location" describes position information and document information as attributes.

Furthermore, as indicated by reference numerals 2708a and 2708b in the figure, the element "location describes an element "device" which is a child element of the element "cdml" as a child element. Then, the element "device" describes apparatus information and document information as attributes.

Thus, the contents 2700 describes position information, apparatus information and time information hierarchically and describes document information for the respective information pieces.

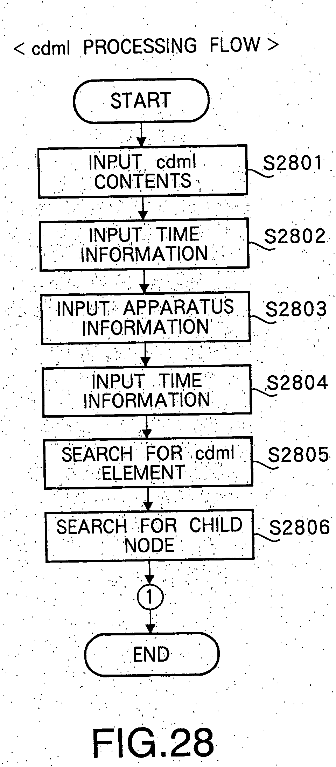

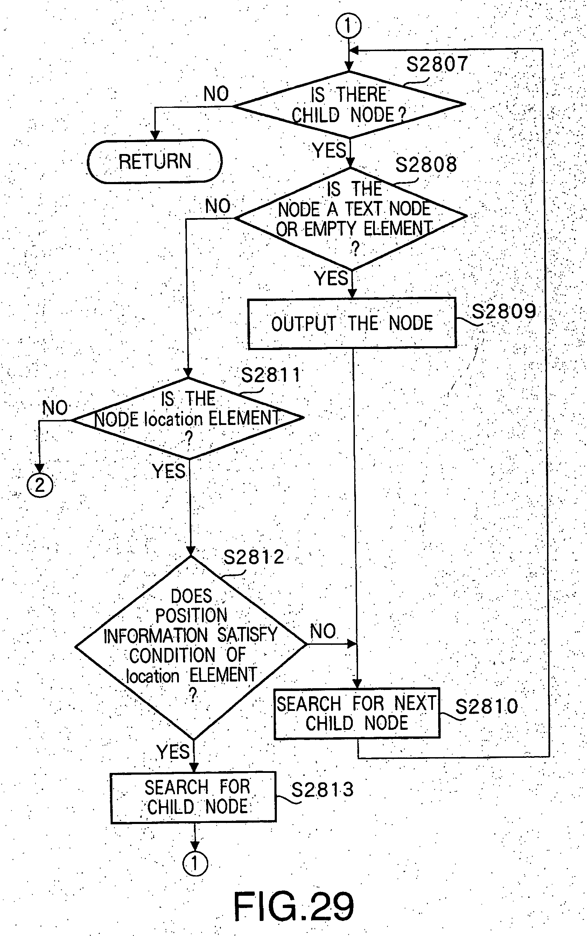

Next, the contents processing of the contents processing apparatus 2501 will be explained in detail using FIG.28 to FIG.30. FIG.28 to FIG.30 are flow charts of contents processing of the contents processing apparatus according to Embodiment 4.

First, the contents processing apparatus 2501 sends the contents request information input from the input section 109 from the request section 110 to the contents providing apparat 102 through the network. Next, the contents processing apparatus 2501 receives contents sent from the contents providing apparatus 102 in response to this contents request information transmitted, the cdml contents in this case, at the reception section 111. Then, the contents reception section 111 outputs the cdml contents to the contents processing section 2502 and the contents processing section 2502 inputs the cdml contents described based on the contents definition shown in FIG. 26 (S2801).

Next, the position information detection section 112 outputs the position information to the contents processing section 2502. The contents processing section 2502 inputs this (S2802). Then, the apparatus information input section 1102 outputs apparatus information to the contents processing section 2502. The contents section 2502 inputs this (S2803). Then, the time information input section 1802 outputs the time information requested by the user to the contents processing section 2502. The contents processing section 2502 inputs this (S2804).

Next, the contents processing section 2502 searches for the root element of cdml from the cdml contents input in S2801 (S2805).

Next, the contents processing section 2502 searches for a child node in the cdml root element (S2806) and decides whether there is any child node or not (S2807). Then, when there is no child node in the root element of cdml, the contents processing section 2502 ends the processing and when there is a child node, it decides whether the child node is a text node which is a node within a name space different from cdml or an empty element (S2808). Then, when the child node is a text node or empty element, the contents processing section 2502 outputs the child node to the contents display section 114 (S2809). Next, the contents processing section 2502 searches for the next child node of the cdml element (S2810) and moves on to the processing in S2807.

On the other hand, in S2808, when the child node is neither a text node nor empty element, the contents processing section 2502 decides whether the node is a location element or not (S2811).

Then, in S2811, when the contents processing section 2502 decides that the node is a location element, it decides whether the attribute "type", attribute "content" and attribute "range" of this location element satisfy the condition of the position information input in S2802 or not (S2812). In S2812, when the contents processing section 2502 decides that the attribute "type", attribute "content" and attribute "range" of the location element satisfy the condition of the position information input in S2802, it searches for a child node of this location element (S2813) and moves on to the processing in S2807. Then, in S2808, when it decides that the child node of this location element is a text node or empty element, the contents processing section 2502 outputs the child node of this location element to the contents display section 114 in S2809.

On the other hand, in S2812 when the contents processing section 2502 decides that the attribute "type", attribute "content" and attribute "range" of this location element do not satisfy the condition of the position information input in S2802, it searches for the next child node (S2810) and moves on to the processing from S2807 onward.

On the other hand, in S2811, when the contents processing section 2502 decides that the node is not the location element, it decides whether the node is a device element or not (S2814).

Then, in S2814, when the contents processing section 2502 decides that the node is a device element, it decides whether the attribute "class" or attribute "model" of this device satisfies the condition of the apparatus information input in S2803 or not (S2815). In S2815, when the contents processing section 2502 decides that the attribute "class" or attribute "model" of the device element satisfies the condition of the apparatus information input in S2803, it searches for a child node of this device element (S2817) and moves on to the processing in S2807. Then, in S2808, when it decides that the child node of this device element is a text node or empty element, it outputs the child node of this device element to the contents display section 114 in S2819.

On the other hand, in S2815, when the contents processing section 2502 decides that the attribute "class" or attribute "model" of the device element does not satisfy the condition of the apparatus information input in S2803, it searches for the next child node (S2816) and moves on to the processing from S2807 onward. On the other hand, in S2814 when the contents processing section 2502 decides that the node is not the device element, it decides whether the node is a time element or not (S2818).

Then, in S2818, when the contents processing section 2502 decides, that the node is a time element, it decides whether the attribute "format", attribute "content", attribute "range" and attribute "unit" of this time element satisfy the condition of the time information input in S2804 or not (S2819). In S2819, when the contents processing section 2502 decides that the attribute "format", attribute "content", attribute "range" and attribute "unit" of this time element satisfy the condition of the time information input in S2804, it searches for a child node of this time element (S2820) and moves on to the processing in S2807. Then, in S2808, when it decides that the child node of this time element is a text node or empty element, it outputs the child node of time element to the contents display section 114 in S2809.

On the other hand, in S2819, when the contents processing section 2502 decides that the attribute "format", attribute "content", attribute "range" and attribute "unit" of this time element do not satisfy the condition of the time information input in S2804, it searches for the next child node (S2816) and moves on to the processing from S2807 onward.

On the other hand, in S2818, when the contents processing section 2502 decides that the node is not a time element, it outputs the node to the contents display section 114 (S2821), searches for the next child node (S2822) and moves on to the processing in S2807.

Then, the contents processing section 2502 carries out the above-described processing on all nodes in the input contents.

Through the above-described processing, if, for example, the contents 2505 adopts a configuration in which one or more other elements are described hierarchically in a child element of an element and the user inputs an attribute of an element and information that matches attributes of other elements, document data described in the child element of an element is output.

For example, when only position information "Tokyo" is input to the contents 2700 shown in FIG.27, the contents processing apparatus 2501 extracts "weather in Tokyo", which is the document data corresponding to the position information "Tokyo."

Furthermore, when "Tokyo" is input as the position information and the information indicated by 2709 in FIG.27 is input as the time information, the contents processing apparatus 2501 extracts the position information "Tokyo" and the document data "today's (Sunday) weather" which is the document data corresponding to the time information indicated by 2709 in FIG.27.

Furthermore, when "Tokyo" as the position information, information indicated by 2709 in the figure as the time information and the information indicated by 2710 in FIG.27 as the position information are input, the contents processing apparatus 2501 extracts document data "weather around Shibuya Station" which is document data corresponding to the position information indicated by 2709 in the figure and corresponding to the position information indicated by 2710 in the figure.

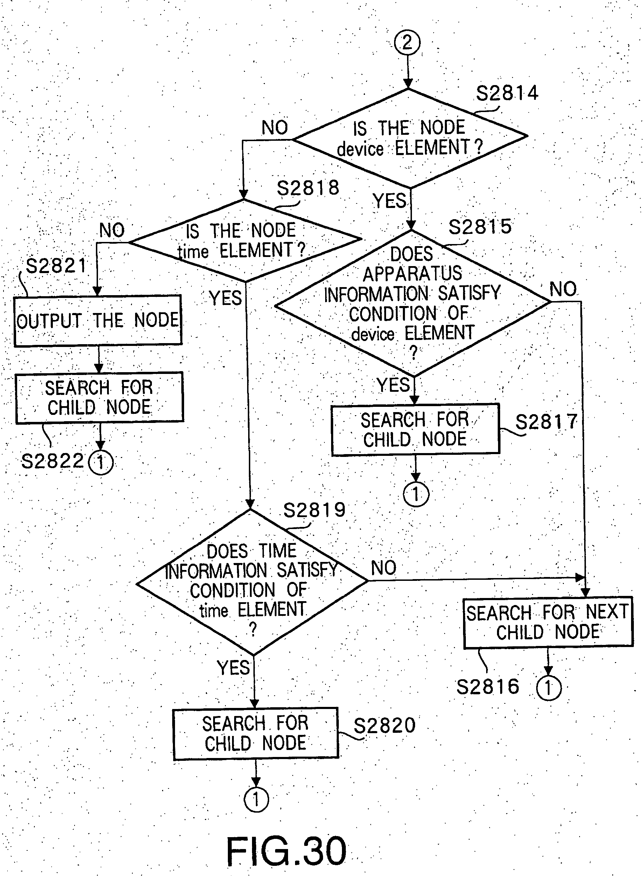

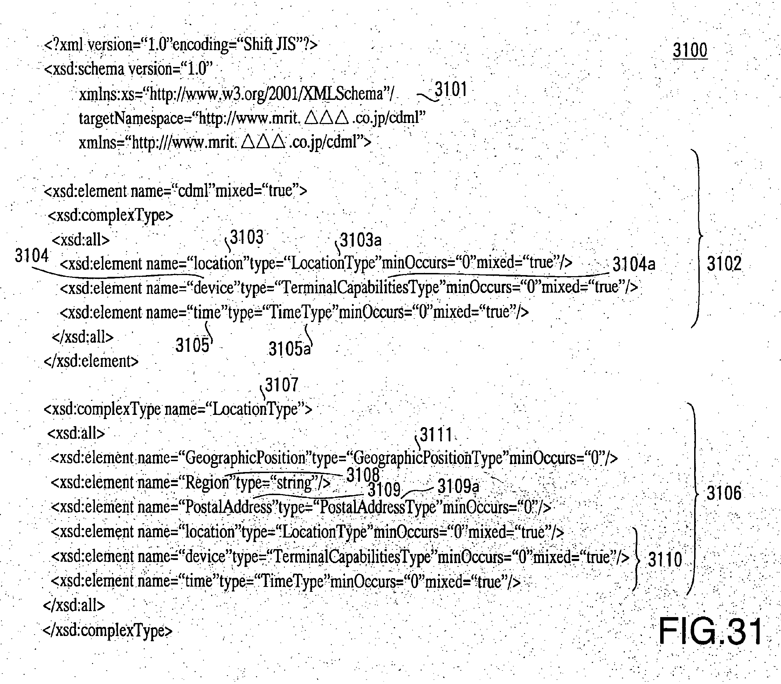

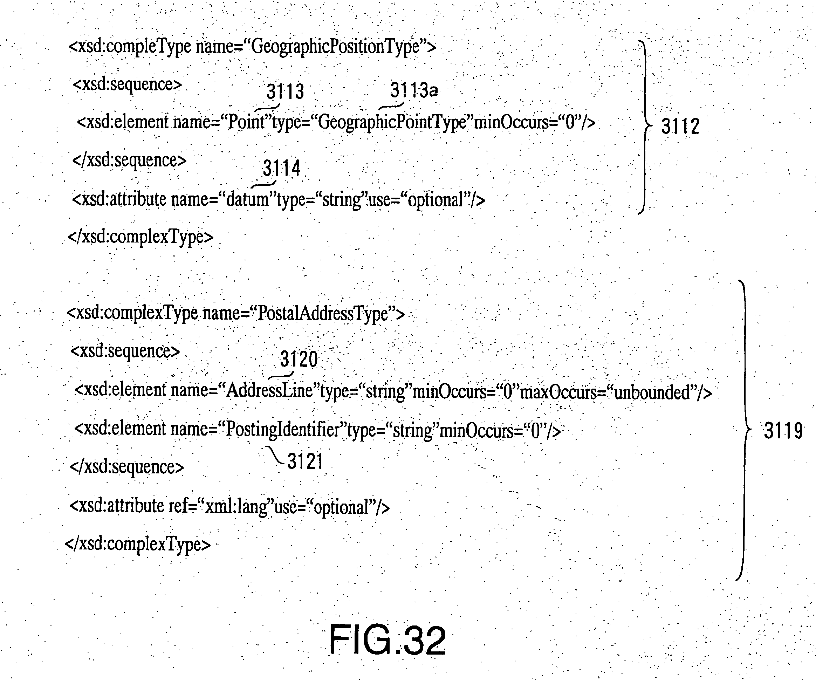

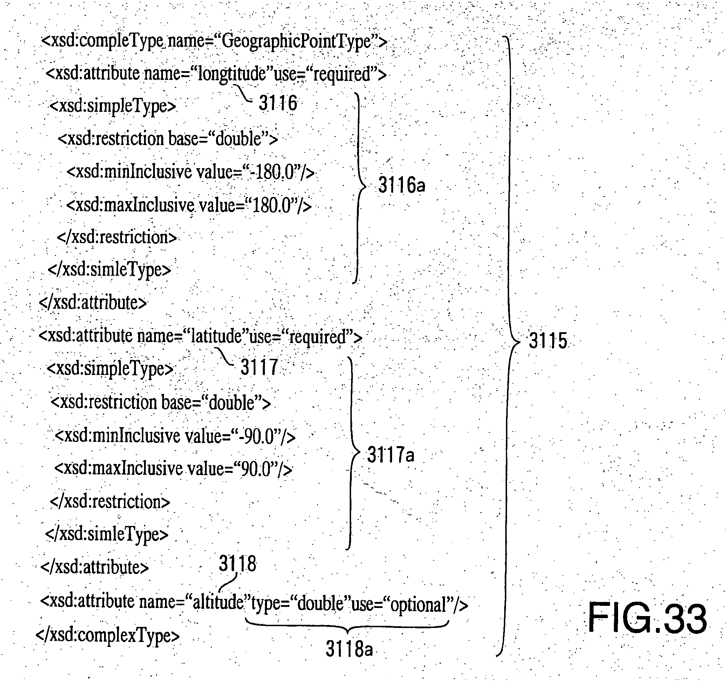

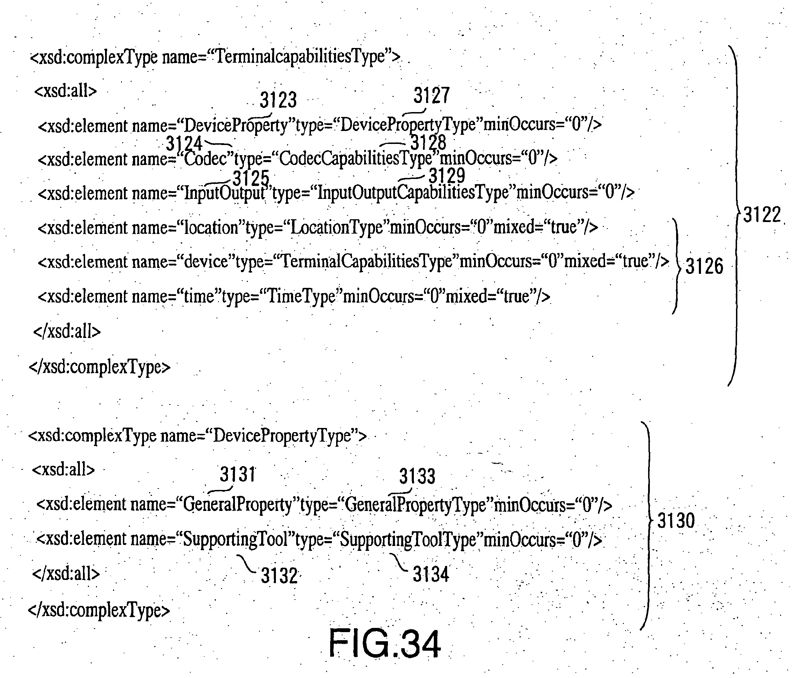

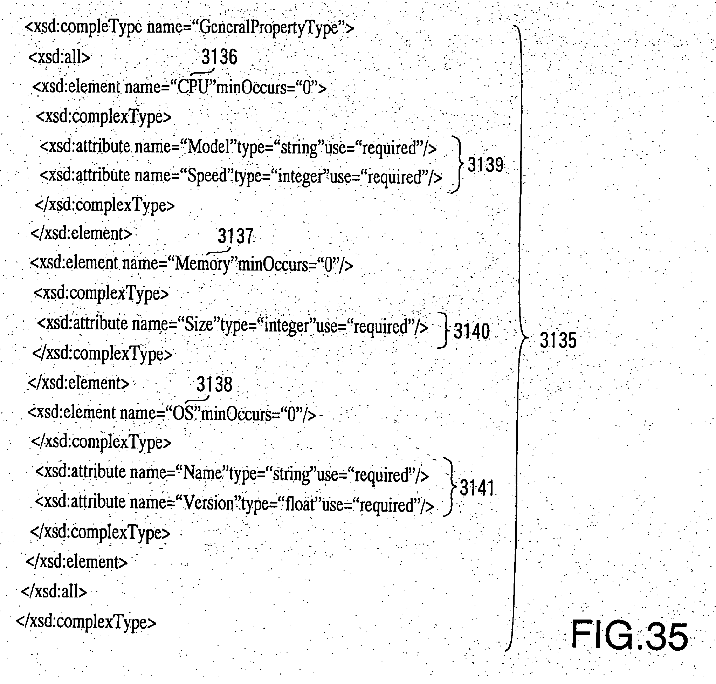

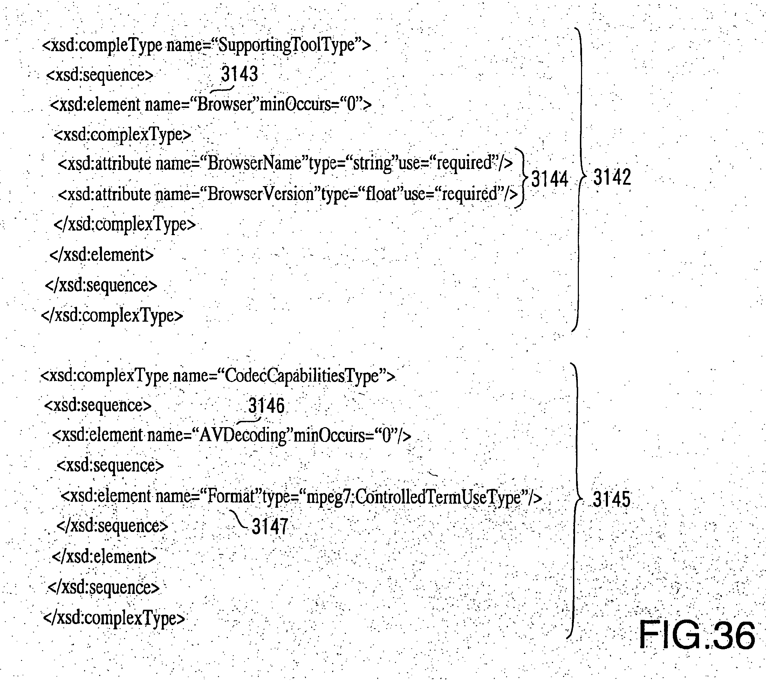

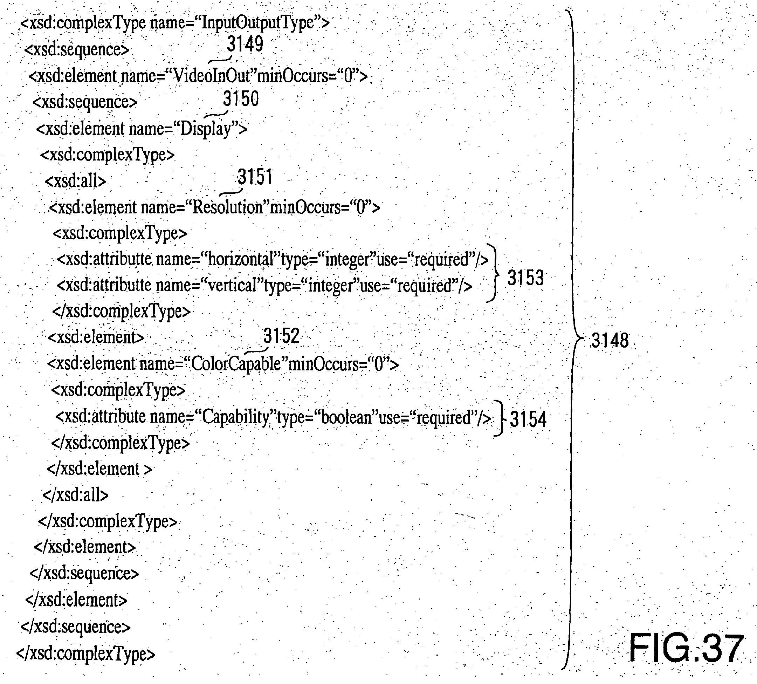

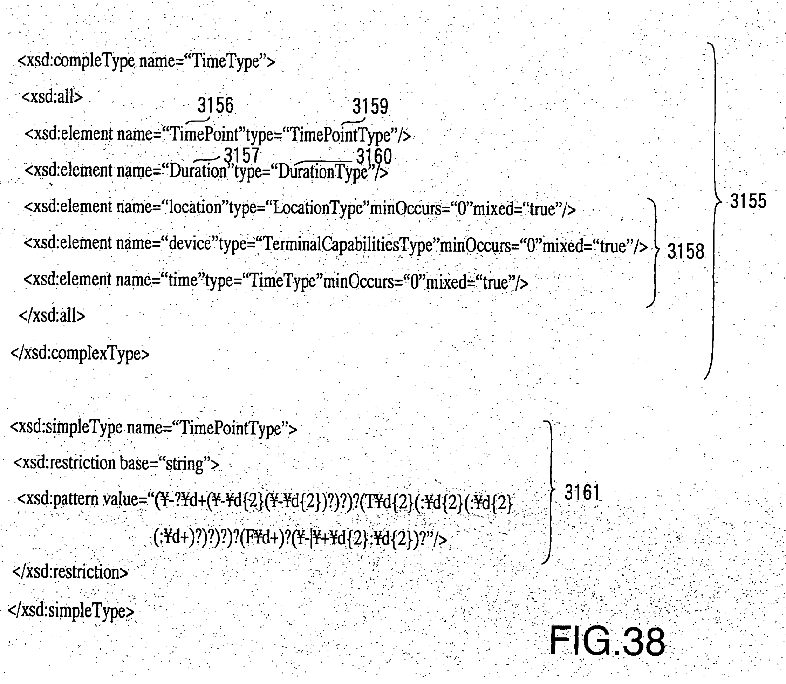

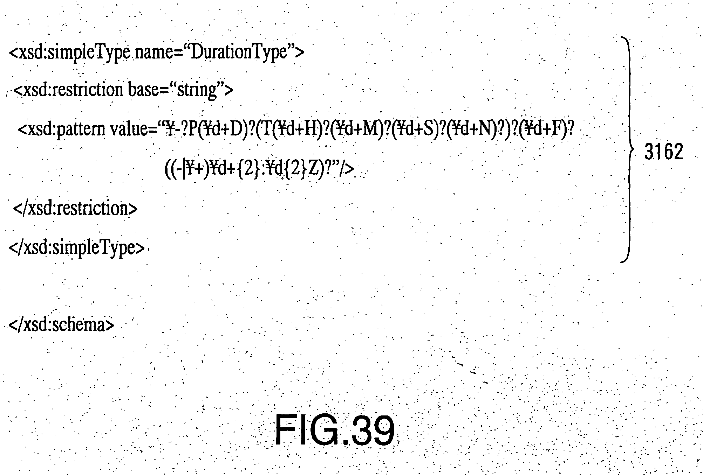

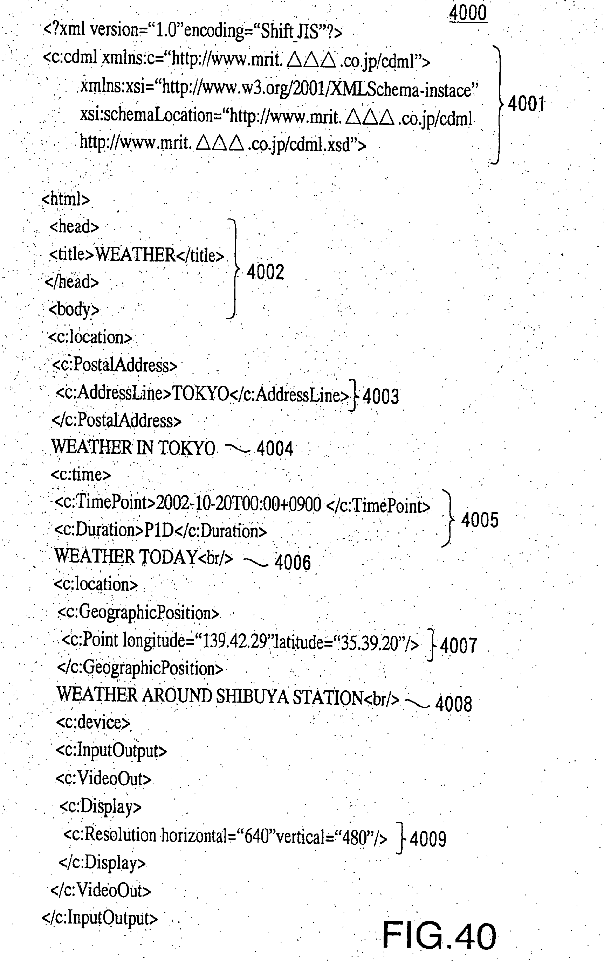

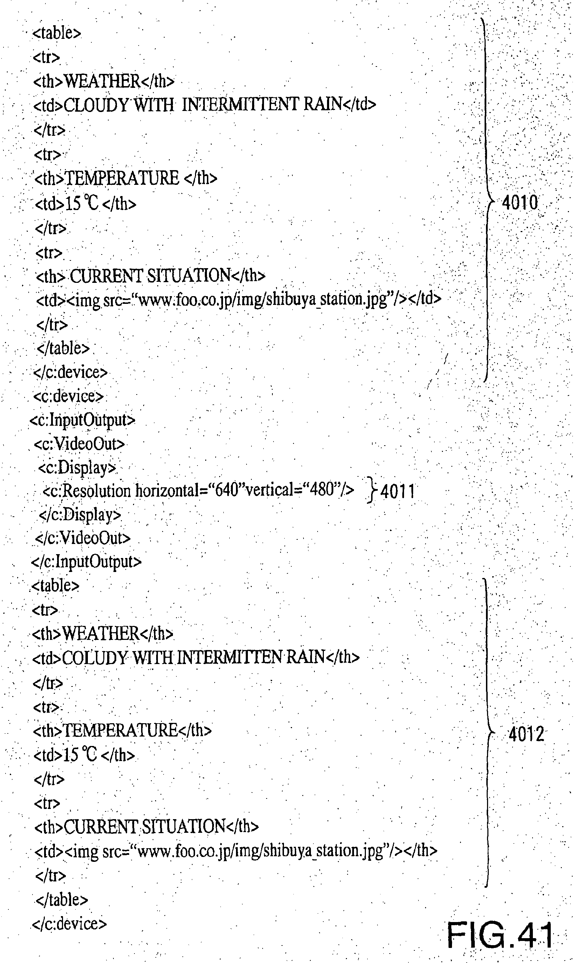

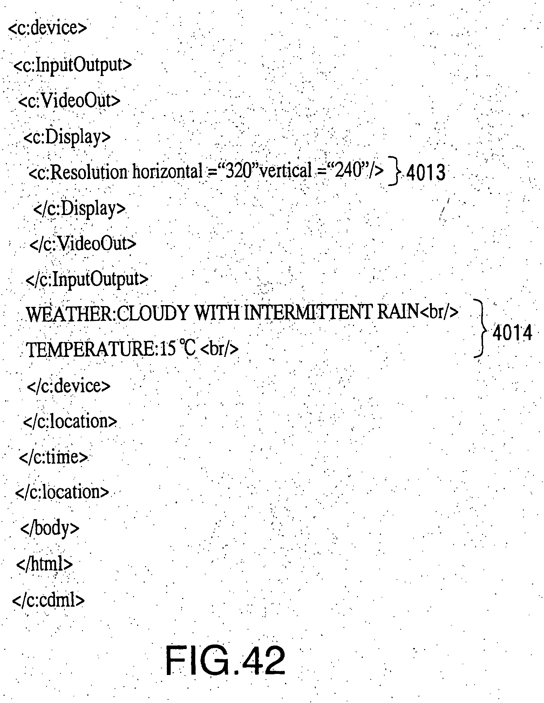

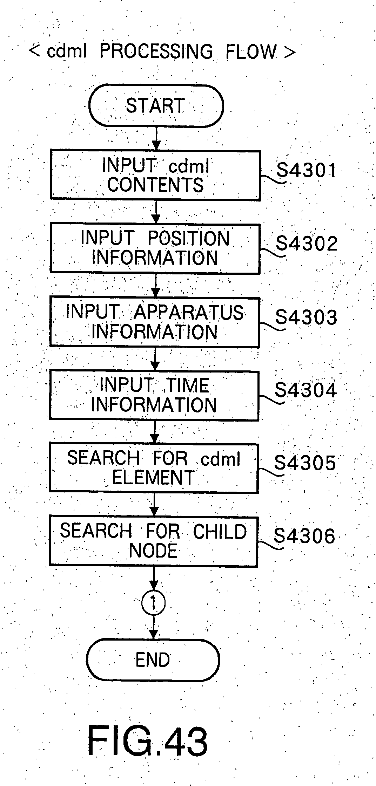

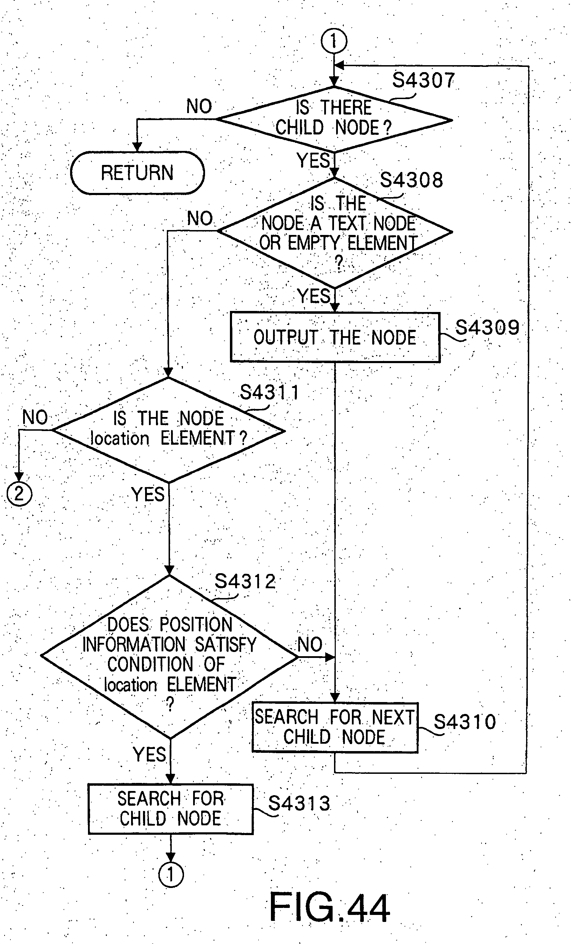

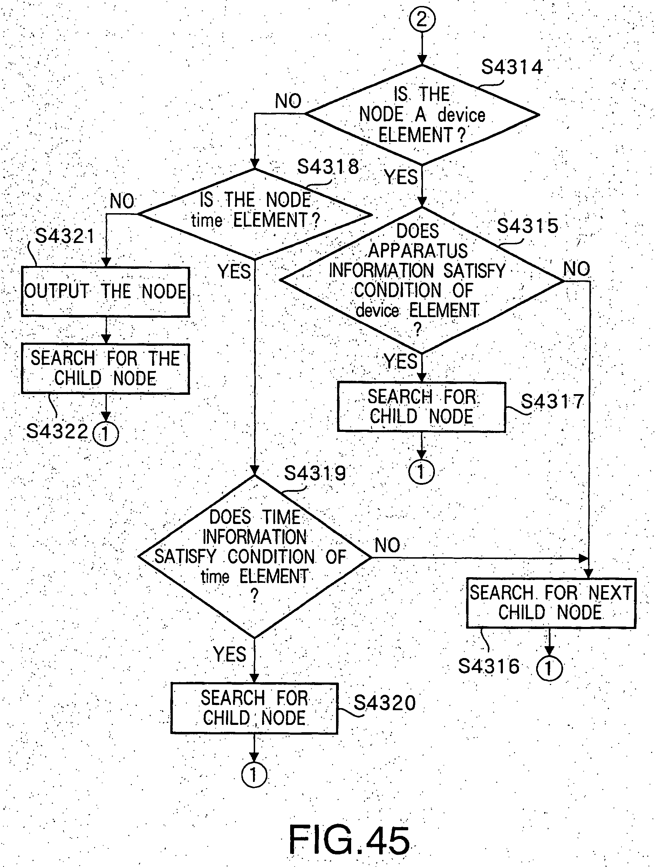

Furthermore, when "Tokyo" as the position information, information indicated by 2709 in the figure as the time information, information indicated by 2710 in the figure as position information and information indicated by 2711 in FIG.27 as the apparatus information are input, then the contents processing apparatus 2501 extracts document data "<table> ∼ <table>" which is document data corresponding to the position information "Tokyo", time information indicated by 2709 in the figure, position information indicated by 2710 in the figure and apparatus information indicated by 2711 in the figure.

Furthermore, when "Tokyo" as position information, information indicated by 2709 in the figure as time information, information indicated by 2710 in the figure as position information and information indicated by 2712 in FIG.27 as apparatus information are input, the contents processing apparatus 2501 extracts document data "weather ∼ 15°C" which is document data corresponding to the position, information "Tokyo", time information indicated by 2709 in the figure, position information indicated by 2710 in the figure and apparatus information indicated by 2712 in the figure.

As described above, according to Embodiment 4, it is possible to input information combining position information, apparatus information and time information for one content input and extract document data corresponding to information combining position information, apparatus information and time information input by the user from one content. This allows the user to extract information combining position information, apparatus information and time information and thereby extract more detailed text data. As a result, the user can obtain necessary information accurately.

Embodiment 4 uses position information, apparatus information and time information as elements associated with document data, but can also adopt a mode using other elements associated with document data.

For example, it is also possible to use information indicating characteristics of the user such as sex, age, preferences. Furthermore, it is also possible to use network delay information, amount of transmission, bandwidth, etc., which is information indicating a network as elements. Furthermore, it is also possible to use information indicating natural environment such as climate, illumination, brightness, indoors, outdoors, etc., as elements.

### (Embodiment 5)

Embodiment 5 of the present invention provides versatility for contents by making the contents compatible with XML Schema. That is, while Embodiment 1 to Embodiment 4 have described contents in XML defined by XML DTD, Embodiment 5 describes contents in XML defined by XML Schema. Embodiment 5 will be explained below. A contents providing system according to Embodiment 5 is the same as that of Embodiment 4, and therefore explanations thereof will be omitted.

First, a contents description definition according to Embodiment 5 will be explained using FIG.31 to FIG.39. FIG.31 to FIG.39 illustrate a contents definition description according to Embodiment 5.

As indicated by reference numeral 3101 in the figure, the contents description definition 3100 according to Embodiment 5 is written in XML Schema.

Furthermore, as indicated by reference numeral 3102 in the figure, the contents description definition 3100 defines that the contents include cdml as an element and the element "cdml" describes 0 or more elements "location" 3103 indicating position information, elements "device" 3104 indicating apparatus information and time 3105 indicating time information as child elements in an arbitrary sequence.

Furthermore, the element "location" 3103 defines LocationType 3103a as a type.

As indicated by reference numeral 3106 in the figure, the LocationType 3103a is defined to have GeographicPosition 3107, Region 3108 and PostalAddress 3109 as child elements. Furthermore, GeographicPosition 3107 is defined to have GeographicPositionType 3111 as type.

Furthermore, as indicated by reference numeral 3110 in the figure, LocationType 3103a is defined to have 0 or more elements "location", elements "device" and elements "time" as child elements in an arbitrary sequence. This causes LocationType 3103a to have a structure of having element "location", element "device" and element "time" as child elements. This makes it possible to recursively describe a child element "location", child element "device" and child element "time" in the element "location" 3103.

Furthermore, as indicated by reference numeral 3112 in the figure, GeographicPositionType is defined to have Point 3113 and datum 3114 as child elements.

Furthermore, element Point 3113 is defined to have Geographic Point Type 3113a as a type.

Furthermore, as indicated by reference numeral 3115 in the figure, GeographicPointType 3113a is defined to have longitude 3116 indicating a longitude, latitude 3117 indicating a latitude and altitude 3118 indicating an altitude as attributes.

The attribute longitude 3116, attribute latitude 3117 and attribute altitude 3118 are described in more detail in the portions indicated by reference numerals 3116a, 3117a and 3118a in the figure.

Thus, the position information can be shown in the contents using a latitude, longitude and altitude.

Furthermore, the element Region 3108 is defined to be described with text. Thus, it is possible to describe the position information in the contents using text. This allows the position information to be described using any range and place-names, etc.

Furthermore, element PostalAddress 3109 is defined to have PostalAddressType 3109a as a type.

As indicated by reference numeral 3119 in the figure, PostalAddressType 3109a is defined to have AddressLine 3120 indicating an address and PostingIdentifier 3121 indicating a postal code as elements.

As is apparent from the figure, the element AddressLine 3120 is designed to describe an address at every line feed for each item.

Thus, an address and postal code can be described as position information for the contents. Furthermore, element "device" 3104 defines TerminalCapabilitiesType 3104a as a type.

As indicated by reference numeral 3122 in the figure, TerminalCapabilitiesType 3104a defines DeviceProperty 3123, Codec 3124, and InputOutput 3125 as child elements.

Furthermore, as indicated by reference numeral 3126 in the figure, the TerminalCapabilitiesType 3104a defines 0 or more elements "location", elements "device" and elements "time" in an arbitrary sequence as child elements. This causes TerminalCapabilitiesType 3104a to have a structure of having element "location", element "device", and element "time" as child elements. This makes it possible to recursively describe child element "location", child element, "device", and child element "time" for the element "device" 3104.

Furthermore, an element DeviceProperty 3123 defines DevicePropertyType as a type.

As indicated by reference numeral 3130 in the figure, DevicePropertyType 3127 defines GeneralProperty 3131 and Supporting Tool 3132 as elements.

Furthermore, an element GeneralProperty 3131 defines GeneralPropertyType 3133 as a type.

As indicated by reference numeral 3135 in the figure, GeneralPropertyType 3133 defines an element CPU 3136 which is information on the CPU of the contents processing section 2502, element Memory 3137 which is a description of the memory used by the contents processing section 2502 and element OS 3138 which is the information on the OS used by the contents processing section 2502 as elements.

Furthermore, as indicated by reference numeral 3139 in the figure, the element CPU 3136 defines an attribute "model" indicating a model number and an attribute "Speed" indicating a processing capacity as attributes.

Furthermore, as indicated by reference numeral 3140 in the figure, the element Memory 3137 defines an attribute "Size" indicating a capacity as an attribute.

Furthermore, as indicated by reference numeral 3141 in the figure, the element OS defines an attribute "Name" indicating the name of the OS and an attribute "Version" indicating the version.

Thus, it is possible to describe information on the contents processing section 2502 in the contents as apparatus information.

Furthermore, for the element SupportingTool 3132, SupportingToolType 3134 is defined as a Type.

As indicated by reference numeral 3142 in the figure, SupportingToolType 3134 defines an element "Browser" 3143 which is information on the browser used by the contents processing apparatus 2501 as an element.

Furthermore, as indicated by reference numeral 3144 in the figure, the element Browser 3143 defines an attribute "Browser Name" indicating the name of the browser and an attribute "Browser Version" indicating the attribute of the browser as attributes.

Thus, it is possible to describe information on the browser used by the contents processing apparatus 2501 as contents apparatus information.

Furthermore, the element Codec 3124 defines CodecCapabilitiesType 3128 as a Type.

As indicated by reference numeral 3145 in the figure, CodecCapabilitiesType 3128 defines an element AV Decoding 3146 which is a decoding system that can be used by the contents processing apparatus 2501 and an element Format 3147 indicating the specification used by the contents processing apparatus 2501 as elements.

Thus, it is possible to describe a decoding system and specification as apparatus information in the contents.

Furthermore, the element InputOutput 3125 defines InputOutputCapabilitiesType 3129 as a Type.

As indicated by reference numeral 3148 in the figure, InputOutputCapabilitiesType 3129 defines an element VideoInOut 3149 which is information on the contents display section 114 as an element.

Element-VideoInOut 3149 defines an element Display 3150 which is information on the contents display section 114 as a child element. Furthermore, the element Display 3150 defines an element Resolution 3151 indicating resolution and ColorCapable 3152 indicating colors that can be displayed as child elements.

As indicated by reference numeral 3153 in the figure, the element Resolution 3151 defines an attribute "horizontal" indicating resolution in the horizontal direction and an attribute "vertical" indicating resolution in the vertical direction as attributes.

This makes it possible to describe the resolution of the contents display section 114 as apparatus information for the contents.

Furthermore, as indicated by reference numeral 3154 in the figure, the element ColorCapable 3152 defines an attribute "Capability" indicating a mode of colors that can be displayed as attribute.

This makes it possible to describe colors that can be displayed by the contents display section 114 as apparatus information for the contents.

Furthermore, the element "time" 3105 defines TimeType 3105a as a type.

As indicated by reference numeral 3155 in the figure, TimeType 3105a defines an element TimePoint 3156 indicating the time and an element Duration 3157 indicating the period as elements.

Furthermore, as indicated by reference numeral 3158 in the figure, TimeType 3105a defines 0 or more elements "location", elements "device" and elements "time" as child elements in an arbitrary sequence. This causes TimeType 3105a to have a structure of having element "location", element "device" and element "time" as child elements. This makes it possible to recursively describe child element "location", child element "device" and child element "time" for the element "time" 3105.

Furthermore, the element TimePoint 3156 defines TimePoint Type 3159 as a Type and the element Duration 3157 defines DurationType 3160 as a Type.

As indicated by reference numeral 3161 in the figure, the description method of the TimePointType 3159 is defined. More specifically, the time is described using year, day, hour, minute, second and time difference.

Furthermore, as indicated by reference numeral 3162 in the figure, the description method of the DurationType 3160 is defined. More specifically, the duration is described using day, hour, minute, second, etc.

Thus, it is possible to describe time and duration as the time information for the contents.

Next, the contents description definition shown in FIG. 30 to FIG.39 will be explained using FIG.40 to FIG. 42. FIG.40 to FIG.42 illustrate the contents description according to Embodiment 5.

As indicated by reference numeral 4001, a contents description 4000 specifies a URL for storing cdml used, a name space and also the root element of the element "cdml" that belongs to the name space.

Furthermore, as indicated by reference numeral 4002 in the figure, a contents description 4000 describes "weather" as a title in the header section enclosed by head tags.

Furthermore, as indicated by reference numeral 4003 in the figure, the contents description 4000 describes "Tokyo" as the position information. Furthermore, reference numeral 4004 in the figure describes text "Tokyo" corresponding to the position information.

Furthermore, the contents description 4000 describes time information as indicated by reference numeral 4005 in the figure. Furthermore, reference numeral 4006 in the figure describes text corresponding to the time information described in 4005 in the figure.

Furthermore, as indicated by reference numeral 4007 in the figure, the contents description 4000 describes position information. Furthermore, reference numeral 4008 in the figure describes text corresponding to position information described in 4007 in the figure.

Furthermore, the contents description 4000 describes apparatus information as indicated by reference numeral 4009 in the figure. Furthermore, reference numeral 4010 in the figure describes information on the text and still image corresponding to the apparatus information described in reference numeral 4009 in the figure.

Furthermore, the contents description 4000 describes apparatus information as indicated by reference numeral 4011 in the figure. Furthermore, reference numeral 4012 in the figure describes information on the text and still image corresponding to the apparatus information described in 4011 in the figure.

Furthermore, the contents description 4000 describes apparatus information as indicated by reference numeral 4013 in the figure. Furthermore, reference numeral 4014 in the figure describes the text corresponding to the apparatus information described in reference numeral 4013 in the figure.

Thus, the contents 4000 describes position information, apparatus information and time information, and describes document information on their respective pieces of information.

Next, contents processing of the contents processing apparatus according to Embodiment 5 will be explained in detail using FIG. 43 to FIG.45. FIG.43 to FIG.45 are flow charts of contents processing of the contents processing apparatus according to Embodiment 5.

First, the contents processing apparatus 2501 sends contents request information input from the input section 109 to the contents providing apparatus 102 from the request section 110 through the network. Then, the contents processing apparatus 2501 receives the contents sent from the contents providing section 102 in response to this contents request information, transmitted, cdml contents in this case, at the contents reception section 111. Then, the contents reception section 111 outputs the cdml contents to the contents processing section 2502 and the contents processing section 2502 inputs the cdml contents described based on the contents definition shown in FIG.31 to FIG.39 (S4301).

Next, the position information detection section 112 outputs the position information to the contents processing section 2502. The contents processing section 2502 inputs this (S4302). Then, the apparatus information input section 1102 outputs apparatus information to the contents processing section 2502. The contents processing section 2502 inputs this (S4303). Next, the time information input section 1802 outputs the time information requested by the user to the contents processing section 2502. The contents processing section 2502 inputs this (S4304).

Next, the contents processing section 2502 searches for the root element of cdml from the cdml contents input in S4301 (S4305).

Next, the contents processing section 2502 searches for a child node in the cdml root element (S4306) and decides whether three is any child node (S4307). Then, when there is no child node in the root element of cdml, the contents processing section 2502 ends the processing and when there is a child node, it decides whether the child node is a text node whose name space is different from cdml or empty element (S4308). Then, when the child node is a text node or empty element, the contents processing section 2502 outputs the child node to the contents display section 114 (S4309). Next, the contents processing section 2502 searches for the next child node of the cdml element (S4310) and moves on to the processing in S4307.

On the other hand, in S4308, when the child node is neither a text node nor empty element, the contents processing section 2502 decides whether the node is a location element or not (S4311).

Then, in S4311, when the contents processing section 2502 decides that the node is a location element, it decides as the condition of this location element whether the attribute longitude 3116, attribute latitude 3117 and attribute altitude 3118 or child element Region 3108 or element AddressLine 3120 and element PostingIdentifier 3121 satisfy the condition of the position information input in S4302 or not (S4312).

In S4312, when the contents processing section 2502 decides that the condition of the location element satisfies the condition of the position information input in S4302, the contents processing section 2502 searches for a child node of this location element (S4313) and moves on to the processing in S4307. Then, in S4308, when the contents processing section 2502 decides that the child node of this location element is a text node or empty element, the contents processing section 2502 outputs the child node of this location element to the contents display section 114 in S4309.

On the other hand, in S4312, when the contents processing section 2502 decides that the condition of the location element does not satisfy the condition of the position information input in S4302, it searches for the next child node (S4310) and moves on to the processing from S4307 onward.

On the other hand, in S4311, when the contents processing section 2502 decides that the node is not the location element, it decides whether the node is a device element or not (S4314).

Then, in S4314, when the contents processing section 2502 decides that the node is a device element, it decides as the condition of this device element whether the attribute "model" and attribute "speed" of the element CPU 3136, attribute "Size" of the element Memory 3137, attributes "Name" and "Version" of the element OS, attribute "BrowserName" and attribute "Browserversion" of the element Browser 3143, element AVDecoding 3136, element Format 3147, attribute "horizontal" and attribute "vertical" of the element Resolution 3151 or attribute "Capability" of the element Colorcapable 3152 satisfy the condition of the apparatus information input in S4303 or hot (S4315).

in S4315, when the contents processing section 2502 decides that the condition of the device element satisfies the condition of the apparatus information input in S4303, the contents processing section 2502 searches for a child node of this device element (S4317) and moves on to the processing in S4307. Then, in S4308, when the contents processing section 2502 decides that the child node of this device element is a text node or empty element, it outputs the child node of this device element to the contents display section 114 in S4319.

On the other hand, in S4315, when the contents processing section 2502 decides that the condition of the device element does not satisfy the condition of the apparatus information input in S4303, it searches for the next child node (S4316) and moves on to the processing from S4307 onward.

On the other hand, in S4314, when the contents processing section 2502 decides that the node is not a device element, it decides whether the node is a time element or not S4318).

Then, in S4318, when the contents processing section 2502 decides that the node is a time element, it decides whether the element TimePoint 3156 and element Duration 3157 satisfy the condition of the time information input in S4304 or not as the condition of this time element (S4319).

In S4319, when the contents processing section 2502 decides that the condition of this time element satisfies the condition of the time information input in S4304, it searches for a child node of this time element (S4320) and moves on to the processing in S4307. Then, in S4308, when it decides that the child node of this time element is a text node or empty element, it outputs the child node of this time element to the contents display section 114 in S4309.

On the other hand, in S4319, when the contents processing section 2502 decides that the condition of this time element does not satisfy the condition of the time information input in S4304, it searches for the next child node (S4316) and moves on to the processing from S4307 onward.

On the other hand, in S4318, when the contents processing section 2502 decides that the node is not a time element, it outputs the node to the contents display section 114 (S4321), searches for the next child node (S4322) and moves on to the processing in S4307.

Then, the contents processing section 2502 carries out the above-described processing on all nodes in the input contents.

As described above, according to Embodiment 5, even when contents are made compatible with XML Schema, it is possible to input information combining position information, apparatus information and time information for one content and extract document data corresponding to information combining the position information, apparatus information and time information input by the user from one content.

This application is based on the Japanese Patent Application No. 2.01-353494 filed on November 19, 2001 and the Japanese Patent Application No. 2002-332951 filed on November 15, 2002, entire content of which is expressly incorporated by reference herein.

### Industrial Applicability

As described above, the present invention allows the user to extract a document adapted to desired elements from one content.

## Claims

1. A data processing apparatus comprising:
a contents input section that inputs contents in which a predetermined element and document data associated with said element are written in a structure description language;
an input section that inputs said element; and
a contents processing section that extracts said document data associated with said element input by said input section from said contents.

2. The data processing apparatus according to claim 1, wherein said contents consist of a plurality of said elements and said document data associated with each of said plurality of elements.

3. The data processing apparatus according to claim 1, wherein said element is position information on positions.

4. The data processing apparatus according to claim 1, wherein said element is apparatus information on said data processing apparatus.

5. The data processing apparatus according to claim 1, wherein said element is time information on time.

6. The data processing apparatus according to claim 1, wherein said contents are associated with information combining a plurality of said different elements and said information and when information combining said different elements is input, said document data corresponding to said information combining different elements is extracted from said contents.

7. The data processing apparatus acccrding to claim 1, wherein said contents are written in XML.

8. The data processing apparatus according to claim 1, wherein said contents are associated with at least one of a still image, sound or moving image.

9. The data processing apparatus according to claim 3, wherein said input section automatically detects position information on the current position of said data processing apparatus and inputs said detected position information.

10. The data processing apparatus according to claim 3, wherein said position information is information specified by a latitude and longitude of a central point and a range from said central point.

11. The data processing apparatus according to claim 3, wherein said position information is information specified as the inside of a polygon made up of at least three vertices specified by latitudes and longitudes.

12. The data processing apparatus according to claim 3, wherein said position information is information specified by any part or whole of a postal code.

13. The data processing apparatus according to claim 3, wherein said position information is information specified by any part or whole of an address.

14. The data processing apparatus according to claim 3, wherein an effective range is specified for said position information.

15. The data processing apparatus according to claim 3, wherein said position information is information indicating an altitude or the number of stories of a building.

16. The data processing apparatus according to claim 4, wherein said apparatus information is information on at least one of processing capacity of the data processing apparatus, browser information, usable decoder and display capacity.

17. The data processing apparatus according to claim 5, wherein said time information is information indicating a specific time.

18. The data processing apparatus according to claim 5, wherein said time information is information indicating a cyclic time.

19. The data processing apparatus according to claim 5, wherein an effective range is specified for said time information.

20. The data processing apparatus according to claim 7, wherein said contents are written in XML defined by XML DTD.

21. The data processing apparatus according to claim 7, wherein said contents are written in XML defined by XML Schema.

22. A data providing apparatus comprising:
a reception section that receives predetermined elements sent through a network;
a contents processing section that refers to a database storing a plurality of contents in which said elements and document data associated with said elements are written in a structure description language and extracts said document data associated with said elements received by said input section from said contents stored in said database; and
a contents transmission section that sends said document data extracted through the network.

23. A program that allows a computer to execute:
a step of inputting contents in which predetermined element and document data associated with said element are written in a structure description language;
a step of inputting said element; and
a step of extracting said document data associated with said element input from said contents.

24. A data processing method comprising:
a step of inputting contents in which a predetermined element and document data associated with said element are written in a structure description language;
a step of inputting said element; and
a step of extracting said document data associated with said element input from said contents.
